# EUROPÄISCHE PATENTSCHRIFT

(11) **EP 3 754 530 B1**
(45) Veröffentlichungstag und Bekanntmachung des Hinweises auf die Patenterteilung: **22.03.2023**
(21) Anmeldenummer: 20182246.7
(22) Anmeldetag: 26.11.2015
(51) Int. Cl.: G06F 21/57, G06F 9/445, G06F 21/77, G06F 8/61

(54) **VERFAHREN ZUM NACHLADEN VON SOFTWARE AUF EINE CHIPKARTE DURCH EINEN NACHLADEAUTOMATEN**
METHOD FOR RELOADING SOFTWARE ON A SMART CARD BY MEANS OF A POST-LOADER
PROCÉDÉ POUR RECHARGER UN LOGICIEL SUR UNE CARTE À PUCE PAR L'INTERMÉDIAIRE D'UN DISPOSITIF AUTOMATIQUE DE RECHARGEMENT

(30) Priorität: 27.11.2014 DE 102014224278
(43) Veröffentlichungstag der Anmeldung: 23.12.2020
(62) Teilanmeldung aus: 15802062.8
(73) Patentinhaber: Bundesdruckerei GmbH, 10969 Berlin (DE)
(72) Erfinder: SCHWAN, Matthias, 10437 Berlin (DE); WIRTH, Klaus-Dieter, 12683 Berlin (DE); FILZHUTH, Elke, 12359 Berlin (DE); MÜLLER, Frank, 10407 Berlin (DE); SCHOLZE, Steffen, 13469 Berlin (DE)
(74) Vertreter: Richardt Patentanwälte PartG mbB

(56) Entgegenhaltungen:
- EP-A1- 1 650 717
- EP-A1- 2 275 915
- EP-A1- 2 453 352
- US-A1- 2008 010 395
- US-A1- 2014 025 940
- US-A1- 2014 047 427
- US-A1- 2014 189 211
- US-A1- 2014 229 657
- "Chapter 10: Identification and Entity Authentication ED - Menezes A J; Van Oorschot P C; Vanstone S A", HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 385 - 424 , 1. Oktober 1996 (1996-10-01), XP001525010, ISBN: 978-0-8493-8523-0 Gefunden im Internet: URL:http://www.cacr.math.uwaterloo.ca/hac/

## Beschreibung

Die Erfindung betrifft ein Verfahren zum Nachladen von durch einen Nachladeautomaten bereitgestellter Software auf eine Chipkarte durch den Nachladeautomaten sowie eine Chipkarte und einen Nachladeautomaten.

Computersysteme bestehend aus Hardware, Betriebssystem und Anwendungen inklusive Nutzerdaten unterliegen einem ständigen technischen Wandel. Wegen der Erweiterung eines solchen Computersystems um technische Funktionalitäten müssen Computersysteme in sicherheitskritischem Umfeld auf eine ausreichende Mechanismenstärke der implementierten Sicherheitsmechanismen überprüft werden. Eine solche Prüfung kann die Erhöhung der Mechanismenstärke, zum Beispiel über eine Erhöhung der Schlüssellänge, aber auch das Abschalten des Sicherheitsmechanismus oder Hinzufügen eines neuen Sicherheitsmechanismus erfordern. Derartige Veränderungen sind im Allgemeinen als "Patches", "Updates" und "Upgrades" bekannt, die von einem Hersteller zur Verfügung gestellt und durch das Computersystem installiert werden. Nach dem erfolgreichen Einspielen eines Patches steht in der Regel das Computersystem mit all seinen Funktionalitäten wieder zur Verfügung. Es wurden lediglich Fehler in der Implementierung behoben. Nach dem erfolgreichen Einspielen eines Updates steht in der Regel das Computersystem mit seinen alten, aber verbesserten Funktionalitäten zur Verfügung. Nach dem erfolgreichen Einspielen eines Upgrades steht in der Regel das Computersystem mit den alten und neuen Funktionalitäten zur Verfügung.

Das Nachladen von Patches Updates und Upgrades ist im Umfeld von Servern, PCs, Tablets oder Smartphones ein etablierter Vorgang, der in der Regel das Laden von Nachladesoftware vom Hersteller auf das Computersystem aus dem Netz oder von einem Datenträger, das Ausführen dieser Software auf dem Computersystem und das Neustarten von Teilen oder des gesamten Computersystems erfordert. Für Sicherheitsmodule wie Chipkarten oder Secure Elements ist aufgrund begrenzten Speicherplatzes und begrenzter Rechenkapazität sowie Beschränkungen durch Sicherheitsevaluierungen ein derartiger Nachladeprozess nicht anwendbar.

In der US 2014/0047427 A1 ist beispielsweise ein Verfahren zum Nachladen von Updates für eine Smartcard beschrieben. Die Smartcard führt mittels einer virtuellen Maschine Anwendungen aus, die auch während der Aktualisierung der Smartcard genutzt werden sollen. Hierzu werden vor dem Update der Smartcard Statusinformationen der virtuellen Maschine und der Anwendung auf einen Server geladen, so dass die Anwendung auf diesem weiter ausgeführt werden kann, und nach Beendigung des Updates auf die Smartcard zurückgeladen. Dieses Verfahren ist aber sehr aufwändig. Zudem ist es aus Sicherheitsgründen nicht erwünscht, dass die Funktionen einer Chipkarte außerhalb dieser Chipkarte ausgeführt werden können.

Die EP 2 453 352 A1 beschreibt ein Verfahren zum Aktualisieren von Software in einem eingebetteten Gerät, wobei die Software in einem EEPROM-Speicher des eingebetteten Geräts gespeichert ist. Das Verfahren umfasst die folgenden Schritte: Ausführen eines Aktualisierungsverwaltungsprogrammcodes, wobei dieser Ausführungsschritt umfasst: Löschen des Speicherbereichs, in dem die frühere Software gespeichert ist, und Speichern mindestens eines Aktualisierungsbefehls am Anfang des Speicherbereichs, wobei die Ausführung dieses Aktualisierungsbefehls zu einem Zugriff auf den Code des Aktualisierungsverwaltungsprogramms führt, Schreiben der aktualisierten Software in den gelöschten Speicherbereich. Ferner umfasst das Verfahren den Schritt: Löschen der Aktualisierungsanweisung, damit die aktualisierte Software beim Start ausgeführt wird.

Die US 2014/025940 A1 beschreibt ein Sicherheitselement, das ein Startprogramm enthält, welches Anweisungen zur Ausführung eines Startschritts umfasst, um zu bestimmen, ob ein nichtflüchtiger Speicher ein aktives Betriebssystem speichert, und im Fall einer Bestätigung, um die Ausführung des Betriebssystems zu starten, zur Ausführung eines Authentifizierungsschritts eines Aktualisierungsgeräts als Funktion erster Authentifizierungsdaten, die durch ein sicheres Element bestimmt werden, und der zweiten Authentifizierungsdaten, die von dem Aktualisierungsgerät empfangen werden, und in Antwort auf den Authentifizierungsschritt zur Ausführung eines Speicherschritts eines neuen Betriebssystems, das von dem Aktualisierungsgerät empfangen wird, in dem nichtflüchtiger Speicher und eines Aktivierungsschritts des neuen Betriebssystems, wenn diese Anweisungen von einem Mikroprozessor ausgeführt werden.

Die US 2014/189211 A1 beschreibt eine persistente Speichervorrichtung, welche sowohl einen persistenten Speicher, der einen Satz von persistenten Speicherblöcken enthält, als auch einen Speichercontroller umfasst. Das persistente Speichergerät speichert und ruft Daten als Antwort auf Befehle ab, die von einem externen Hostgerät empfangen wurden. Das persistente Speichergerät speichert eine Zuordnung von logischen Blockadressen zu physischen Adressen. Das persistente Speichergerät speichert ferner als Antwort auf einen Neuzuordnungsbefehl eine aktualisierte Zuordnung von logischen Blockadressen zu physischen Adressen.

Der vorliegenden Erfindung liegt daher die Aufgabe zugrunde ein verbessertes Verfahren zum Nachladen von Software auf eine Chipkarte zu schaffen. Diese Aufgabe wird jeweils mit den Merkmalen der unabhängigen Patentansprüche gelöst. Ausführungsformen der Erfindung sind mit den abhängigen Patentansprüchen angegeben. Sofern nicht ausdrücklich gegenteiliges zum Ausdruck gebracht wird, können Ausführungsformen der Erfindung frei miteinander kombiniert werden.

In einem ersten Aspekt betrifft die Erfindung ein Verfahren zum Nachladen von durch einen Nachladeautomaten bereitgestellter Software auf eine Chipkarte. Dabei wird die Software durch den Nachladeautomaten auf die Chipkarte nachgeladen. Die Chipkarte weist dabei einen Prozessor, eine Kommunikationsschnittstelle und einen nicht-flüchtigen elektronischen Speicher auf. In dem nicht-flüchtigen elektronischen Speicher sind eine logische Datenstruktur (LDS), sowie Nutzdaten und Kontrolldaten gespeichert.

Unter "Nutzdaten" werden dabei sämtliche im Dateisystem des Chipkartenbetriebssystems gespeicherten Daten verstanden, die zur Laufzeit vom Chipkartenbetriebssystem nur intern verwendet werden können (z.B. Schlüssel und zugehörige kryptografische Parameter) oder unter Einhaltung der in den Kontrolldaten gespeicherten Zugriffsbedingungen ausgelesen werden können (z.B. Daten des Inhabers). Insbesondere werden unter "Nutzdaten" hier solche Daten verstanden, die ein mit der Chipkarte interoperables Anwendungsprogramm eines Terminals für eine biometrische Authentifizierung benötigt, wie zum Beispiel biometrische Daten, insbesondere Fingerabdruckdaten, Gesichtsbiometriedaten und/oder Irisscandaten. Solche sensitiven Nutzdaten dürfen nur nach vorheriger Authentifizierung des Terminals aus der Chipkarte ausgelesen werden, wobei die hierzu erforderlichen kryptografischen Zugriffsbedingungen durch die jeweiligen Kontrolldaten spezifiziert werden.

Unter "Kontrolldaten" einer Chipkarte werden im Gegensatz zu den Nutzdaten die zugeordneten Verwaltungsdaten verstanden, die insbesondere mindestens eine Zugriffsbedingung für den Zugriff auf die Nutzdaten festlegen. Ferner können die Kontrolldaten auch eine Angabe der Position der betreffenden Datei in dem Chipkartendateisystem beinhalten, beispielsweise in Form eines Zeigers auf den jeweiligen Nachfolgerknoten in dem Dateibaum des Dokuments, sowie z.B. einen File Identifier (FID), einen Application Identifier (AID), die Größe der Datei etc..

Um die durch den Nachladeautomaten bereitgestellte Software auf die Chipkarte nachzuladen, wird in einem ersten Verfahrensschritt eine Kommunikationsverbindung zwischen dem Nachladeautomaten und der Chipkarte über deren Kommunikationsschnittstelle aufgebaut. Durch das Aufbauen der Kommunikationsverbindung kann beispielsweise der Chipkarte durch den Nachladeautomaten signalisiert werden, dass zumindest Teile der auf der Chipkarte gespeicherten Anwendungen oder das Chipkartenbetriebssystem aktualisiert werden sollen. Bei der Kommunikationsverbindung kann es sich sowohl um eine drahtlose Verbindung beispielsweise über NFC, RFID, Bluetooth oder Ähnliches, oder eine kontaktbehaftete Verbindung handeln, die beispielsweise durch Einführen der Chipkarte in den Nachladeautomaten hergestellt wird.

Nachdem die Kommunikationsverbindung zwischen dem Nachladeautomaten und der Chipkarte hergestellt wurde, erzeugt der Prozessor der Chipkarte einen ersten Datensatz durch Verschlüsseln zumindest eines Teils der in den nicht flüchtigen elektronischen Speicher gespeicherten Nutzdaten und/oder zumindest eines Teils der in dem nicht-flüchtigen elektronischen Speicher gespeicherten Kontrolldaten und/oder der logischen Datenstruktur. Dieser erste Datensatz wird dann über die Kommunikationsverbindung an den Nachladeautomaten übermittelt, woraufhin der Nachladeautomat den ersten Datensatz abspeichert. Hierzu kann der Nachladeautomat beispielsweise über flüchtige oder nicht-flüchtige Speichermittel verfügen.

Anschließend wird die nachzuladende Software auf die Chipkarte durch Übertragen der Software über die Kommunikationsverbindung nachgeladen, wobei die nachzuladende Software im nicht flüchtigen elektronischen Speicher der Chipkarte gespeichert wird. Nachdem das Nachladen der Software abgeschlossen wurde, wird dann der erste Datensatz, welcher in dem Nachladeautomat gespeichert ist, wieder über die Kommunikationsverbindung an die Chipkarte übermittelt. Der Prozessor der Chipkarte kann dann eine Wiederherstellung der Nutzdaten und/oder der Kontrolldaten und/oder der logischen Datenstruktur durch Entschlüsseln des ersten Datensatzes und Speichern der in dem ersten Datensatz enthaltenen Nutzdaten und/oder Kontrolldaten und/oder logischen Datenstruktur in den nicht flüchtigen elektronischen Speicher veranlassen. Anschließend kann vorgesehen sein, dass der Nachladeautomat nach dem Zurückspielen des ersten Datensatzes auf die Chipkarte den ersten Datensatz aus seinem Speicher löscht. Handelt es sich bei dem Speicher des Nachladeautomaten beispielsweise um einen nicht-flüchtigen Speicher kann der Nachladeautomat dazu ausgebildet sein, den ersten Datensatz aktiv aus dem Speicher zu löschen. Ist der Speicher des Nachladeautomaten als flüchtiger Speicher ausgeführt, wird bei einem Abschalten des Nachladeautomaten automatisch auch der Speicher des Automaten gelöscht, sofern hierbei die Stromversorgung des Speichers abgeschaltet wird. Dabei kann das abschließende Löschen des ersten Datensatzes aus dem Speicher des Nachladeautomaten vorteilhaft sein, um einem Missbrauch der in dem ersten Datensatz enthaltenen Daten vorzubeugen.

Ausführungsformen der Erfindung können den Vorteil haben, dass durch das Auslagern von in der Chipkarte gespeicherten Nutzdaten und/oder der Kontrolldaten und/oder der logischen Datenstruktur in den Nachladeautomaten der Nachladevorgang an sich in weiten Teilen frei gestaltet werden kann. Da nach Auslagerung der vorgenannten Daten kein Datenverlust mehr zu befürchten ist, kann beispielsweise durch den Nachladeautomaten nach Ausführungsformen der Erfindung ein sogenanntes Factory Reset, also ein Zurücksetzen der Chipkarte auf den Auslieferungszustand erfolgen, wobei im Zuge des Factory Resets gleichzeitig neue Anwendungsdaten und/oder ein neues Chipkartenbetriebssystem auf die Chipkarte übertragen werden. Dabei kann der Satz von übertragener Software beispielsweise vorher exemplarisch auf seine Funktionalität hin getestet werden und wird dann als Ganzes auf die Chipkarte übertragen. Somit ist sichergestellt, dass die auf der Chipkarte nach dem Nachladevorgang installierten Anwendungen auch untereinander kompatibel sind.

Durch das anschließende Zurückspielen der Nutzdaten und/oder der Kontrolldaten und/oder der logischen Datenstruktur von dem Nachladeautomaten auf die Chipkarte, wird dann die Chipkarte wieder dahingehend personalisiert, dass beispielsweise alle durch einen Nutzer der Chipkarte gespeicherten Passwörter, Schlüssel, Laufzeitdaten, Zugriffsberechtigungen oder ähnliches wieder auf der Chipkarte enthalten sind.

Weiter könnte das erfindungsgemäße Verfahren den Vorteil haben, dass ein hierbei verwendeter Nachladeautomat vollständig autark agieren kann, da für die Funktionalität des Nachladens keinerlei Kommunikation des Nachladeautomaten nach au-ßen notwendig ist. Da der Nachladeautomat ferner lediglich Software auf die Chipkarte nachladen kann, nicht jedoch auf die in dem ersten Datensatz verschlüsselten Daten der Chipkarte zugreifen kann, müssen nicht die Anforderungen an eine sichere Umgebung einer Personalisierung eines Sicherheitsdokuments erfüllt werden. Ferner werden die Daten, welche in den Nachladeautomaten ausgelagert werden, nur temporär in dem Nachladeautomaten gespeichert und sind ausschließlich durch jene Chipkarte, welche die Daten ursprünglich bereitgestellt hat, wieder zu entschlüsseln.

Sollte hierbei beispielsweise durch einen Stromausfall der Nachladevorgang unterbrochen werden, könnte das Nachladen der Software ohne Weiteres wieder von vorne gestartet werden, indem die Chipkarte erneut zurückgesetzt wird und anschließend der Nachladevorgang gestartet wird, ohne dass hierbei ein Informationsverlust zu befürchten wäre. Dies setzt jedoch einen nicht-flüchtigen Speicher des Nachladeautomaten voraus.

Nach einer Ausführungsform der Erfindung weist die Chipkarte ein Chipkartenbetriebssystem mit einem hierarchischen Chipkartendateisystem und darin gespeicherten Anwendungen auf. Dabei umfasst die nachzuladende Software ein Chipkartenbetriebssystem und/oder Anwendungen. Das in der nachzuladenden Software enthaltene Chipkartenbetriebssystem bzw. die in der nachzuladenden Software enthaltenen Anwendungen sollen dabei ein auf der Chipkarte installiertes erstes Chipkartenbetriebssystem und/oder einen ersten Teil der auf der Chipkarte installierten Anwendungen ersetzen.

Das erfindungsgemäße Verfahren umfasst dann die weiteren Schritte des Löschens der in dem ersten Datensatz an den Nachladeautomaten übermittelten Nutzdaten und/oder der Kontrolldaten und/oder der logischen Datenstruktur aus dem nicht-flüchtigen elektronischen Speicher nachdem der erste Datensatz an den Nachladeautomaten übermittelt wurde. Dabei kann der Löschvorgang sowohl von der Chipkarte selbst als auch vom Nachladeautomaten angestoßen werden. Im Zuge des Nachladens wird dann die von dem Nachladeautomaten an die Chipkarte übertragene Software in den durch das Löschen der in dem ersten Datensatz an den Nachladeautomaten übermittelten Nutzdaten und/oder Kontrolldaten und/oder logischen Datenstruktur freigewordenen Speicherbereich des nicht-flüchtigen elektronischen Speichers gespeichert. Anschließend wird die nachgeladene Software durch den Prozessor der Chipkarte auf der Chipkarte installiert.

Nachdem die Installationen der nachgeladenen Software abgeschlossen ist, wird dann eine Funktionsprüfung der installierten nachgeladenen Software durchgeführt, wobei bei Feststellung der korrekten Funktionalität der installierten nachgeladenen Software das Verfahren weiter das Löschen des ersten Chipkartenbetriebssystems und/oder des ersten Teils der Anwendung beinhaltet und bei Feststellung einer fehlerhaften Funktionalität der installierten, nachgeladenen Software, das Verfahren das Löschen der neu installierten nachgeladenen Software umfasst.

Ausführungsformen der Erfindung könnten den Vorteil haben, dass das bestehende Konstrukt aus Chipkartenbetriebssystem und installierten Anwendungen auf der Chipkarte verbleiben kann und eine hierzu parallel neu installierte, nachgeladene Software auf der Chipkarte zunächst auf ihre Funktion überprüft werden kann. Im Falle eines Nichtfunktionierens der nachgeladenen Software kann dann auf die ursprüngliche, funktionsfähige Softwarekonfiguration zurückgegriffen werden. Üblicherweise ist der Chipkartenspeicher beispielsweise in einer Smartcard sehr begrenzt. Daher ist es üblicherweise nicht möglich, mehrere Konfigurationen von Chipkartenbetriebssystemen und installierten Anwendungen auf einer Chipkarte vorzuhalten, um beispielsweise nach Veränderungen in einer Konfiguration deren Funktionalität zu überprüfen. Durch die erfindungsgemäße Lösung wird jedoch durch die Auslagerung der Nutzdaten und/oder der Kontrolldaten und/oder der logischen Datenstruktur an den Nachladeautomaten ein freier Speicherbereich geschaffen, welcher je nach Umfang der ausgelagerten Daten ausreichen kann, um eine zweite Softwarekonfiguration auf die Chipkarte vorzuhalten, so dass bei einer möglicherweise fehlerhaften Nachinstallation von Software auf ein ursprünglich installiertes Softwarepaket zurückgegriffen werden kann.

Nach einer Ausführungsform der Erfindung umfasst das Aufbauen der Kommunikationsverbindung zwischen Nachladeautomaten und Chipkarte eine gegenseitige Authentisierung des Nachladeautomaten und der Chipkarte. Hierzu kann beispielsweise ein Austausch von Zertifikaten zwischen Nachladeautomat und Chipkarte vorgesehen sein. Erst nach erfolgreicher Authentisierung zwischen Nachladeautomat und Chipkarte kann dann über einen sicheren Kommunikationskanal der erste Datensatz übermittelt werden. Ferner erhält nach der Ausführungsform der Nachladeautomat nur nach erfolgreicher Authentisierung gegenüber der Chipkarte Zugriffsrechte auf den nicht-flüchtigen elektronischen Speicher der Chipkarte. So ist es beispielsweise für den Nachladeautomaten erst nach erfolgreicher Authentisierung möglich, im Zuge eines Nachladevorgangs Anwendungen oder das Chipkartenbetriebssystem von der Chipkarte zu löschen bzw. einen solchen Löschvorgang anzustoßen. Hierdurch könnte vermieden werden, dass eine unbefugte Entität, wie beispielsweise ein korrumpierter Nachladeautomat einen Zugriff auf die Chipkarte erhält und dabei möglicherweise sensible Daten eines Chipkartennutzers aus der Chipkarte ausliest.

Nach einer weiteren Ausführungsform ermittelt der Nachladeautomat nach Aufbau des sicheren Kommunikationskanals mit der Chipkarte zumindest einen Identifikator der Chipkarte, wobei der Nachladeautomat anhand des zumindest einen Identifikators die auf der Chipkarte nachzuladende Software ermittelt. Dabei kann beispielsweise der Identifikator Informationen über die Versionsnummer des auf der Chipkarte installierten Betriebssystems oder der Anwendungen enthalten, oder aber den Chipkartentyp selbst identifizieren, so dass der Nachladeautomat anhand dieser Daten entscheiden kann, welche Software auf die Chipkarte nachzuladen ist, bzw. ob überhaupt ein Nachladevorgang notwendig ist. Stellt sich nämlich beispielsweise heraus, dass die auf der Chipkarte installierte Software der Version der Software entspricht, welche nachgeladen werden soll, ist ein Nachladevorgang nicht mehr notwendig. Dabei kann es nach einer Ausführungsform auch vorgesehen sein, dass bereits im Zuge der Authentisierung zwischen Nachladeautomat und Chipkarte zum Austausch eines Identifikators für den Chipkartentyp bzw. die installierte Software kommt.

Nach einer weiteren Ausführungsform kann ferner vorgesehen sein, dass die nachzuladende Software auf einem Nachladetoken enthalten ist, wobei der Nachladetoken zu Beginn des Verfahrens mit dem Nachladeautomaten verbunden wird, wobei die Verbindung zwischen Nachladeautomat und Nachladetoken für eine Datenübertragung zwischen Nachladeautomat und Nachladetoken ausgebildet ist. Dabei ist der Nachladeautomat dazu ausgebildet, die nachzuladende Software aus dem Nachladetoken über die Kommunikationsverbindung in den ersten nicht flüchtigen Speicher der Chipkarte im Zuge eines Nachladevorgangs zu übertragen.

Ausführungsformen der Erfindung könnten den Vorteil haben, dass durch die Verwendung eines Nachladetokens ein generischer Nachladeautomat verwendet werden kann, da die nachzuladende Software jeweils durch den Nachladetoken gegeben ist. Somit können verschiedene Softwarekonfigurationen mit ein und demselben Nachladeautomaten auf eine Chipkarte nachgeladen werden. Ferner kann durch die Verwendung eines Nachladetokens ein Nachladeautomat vollständig autark gestaltet werden, da es für eine Änderung der durch den Nachladeautomat nachzuladende Software nicht notwendig ist, eine Verbindung zu einem Netzwerk wie beispielsweise dem Internet aufzubauen.

Nach einer weiteren Ausführungsform weist die Chipkarte einen schreibgeschützten, nicht-flüchtigen, gesicherten Speicherbereich auf. Dieser schreibgeschützte Speicherbereich beinhaltet zumindest die Funktion des Entschlüsselns des ersten Datensatzes sowie das hierzu notwendige Schlüsselmaterial. Beispielsweise kann es vorgesehen sein, dass der zum Erzeugen des ersten Datensatzes verwendete Schlüssel für jeden Nachladevorgang aus einem Satz von Chipkartenparametern oder weiteren Attributen erzeugt wird. Durch Ablegen dieser Attribute bzw. Parameter sowie einem Programmmodul, welches die Funktionalität des Entschlüsselns beinhaltet, in einem schreibgeschützten, nicht-flüchtigen und gesicherten Speicherbereich wird gewährleistet, dass die Chipkarte auch nach einem vollständigen Reset (Factory Reset) immer noch in der Lage ist, den ersten Datensatz zu entschlüsseln.

Nach einer weiteren Ausführungsform wird der erste Datensatz durch eine symmetrische Verschlüsselung mit einem chipkartenindividuellen Schlüssel erzeugt. Dabei ist der chipkartenindividuelle Schlüssel in dem geschützten Speicherbereich gespeichert oder wird aus chipkartenspezifischen Attributen abgeleitet, sobald durch den Aufbau der Kommunikationsverbindung der Chipkarte die Absicht signalisiert wurde, Software auf die Chipkarte nachzuladen. Insbesondere das Ableiten des chipkartenindividuellen Schlüssels aus chipkartenspezifischen Attributen könnte den Vorteil haben, dass ohne Kenntnis der die Chipkarte charakterisierenden Parameter eine Erzeugung des Schlüssels, welcher zur Ver- und Entschlüsselung des ersten Datensatzes verwendet wird, nicht möglich ist. Ferner ist die Verwendung eines symmetrischen Verschlüsselungsverfahrens zur Erzeugung des ersten Datensatzes vorteilhaft, da sie im Allgemeinen ein Verschlüsselungsverfahren mit einem sehr geringen Komplexitätsgrad darstellt. Somit ist sie auf einem möglicherweise sehr begrenzten Chipkartenspeicher bzw. begrenzten Prozessorleistungen üblicherweise ohne Weiteres implementierbar.

Nach einer weiteren Ausführungsform wird der erste Datensatz durch die Chipkarte mit einem chipkartenindividuellen Schlüssel zusätzlich zum Verschlüsseln signiert. Nachdem die Chipkarte von dem Nachladeautomaten nach Abschluss des Nachladevorgangs den ersten Datensatz empfängt, überprüft die Chipkarte die Signatur des ersten Datensatzes. Nur bei erfolgreicher Überprüfung der Signatur wird dann der erste Datensatz durch die Chipkarte entschlüsselt und die darin enthaltenen Nutzdaten in der Chipkarte wieder installiert. Ferner kann vorgesehen sein, dass bei einer fehlerhaften Signatur eine Fehlermeldung ausgegeben wird. Es ist überdies auch möglich, den ersten Datensatz vor der Übermittlung an den Nachladeautomaten nicht zu verschlüsseln und nur zu signieren. Hierzu ist es jedoch notwendig, dass sowohl der Übertragungskanal von Chipkarte zu Nachladeautomat als auch der Speicher des Nachladeautomaten vor einem Zugriff durch unbefugte geschützt ist. Die Signatur des ersten Datensatzes kann dann genutzt werden um eventuell auftretende Veränderungen im ersten Datensatz aufgrund der Übertragung, beispielsweise wegen eines technischen Defekts, zu erkennen.

Ausführungsformen der Erfindung könnten den Vorteil haben, dass eine Manipulation der in dem ersten Datensatz enthaltenen Nutzdaten erschwert wird, da in diesem Fall auch die Signatur des ersten Datensatzes verändert würde. Dies würde jedoch durch die Chipkarte bei der Überprüfung der Signatur nach Rückspielen des ersten Datensatzes von dem Nachladeautomaten auf die Chipkarte erkannt.

Nach Ausführungsformen der Erfindung beinhaltet das Verfahren ferner eine Änderung von Kontrolldaten der Chipkarte, wobei die Chipkarte einen flüchtigen Arbeitsspeicher aufweist und wobei das Chipkartendateisystem Verzeichnisdaten (DFs) und Datendateien (EFs) beinhaltet. Ein Dateibaum bestehend aus zumindest einer Verzeichnisdatei und mehreren Datendateien ist in dem nicht-flüchtigen Speicher der Chipkarte gespeichert. In zumindest einer der Dateien sind Kontrolldaten für die Nutzdaten, welche in einem Speicherbereich des Speichers der Chipkarte gespeichert sind, gespeichert. Bei den Kontrolldaten kann es sich beispielsweise um eine Zugriffsbedingung auf die EF bzw. auf die von einer DF abhängigen Dateien handeln. In der zumindest einen Datendatei ist ein Zeiger auf den Speicherbereich der Nutzdaten gespeichert.

Eine Änderung der Kontrolldaten kann beispielsweise notwendig werden, wenn auf der Chipkarte im Zuge des Nachladevorgangs neue Anwendungen, welche beispielsweise neue kryptographische Funktionen implementieren eingerichtet wurden, welche bei Zugriff auf die Nutzdaten verwendet werden sollen.

Eine Änderung der Kontrolldaten der Chipkarte erfolgt dabei im Wirkbetrieb, das heißt nachdem eine Initialisierung und eine Personalisierung sowie die Aktivierung der Chipkarte für den Wirkbetrieb bereits stattgefunden haben. Dies wird nach Ausführungsformen der Erfindung dadurch ermöglicht, dass die Kontrolldaten eines Datenobjektes, die auch als Datendatei bezeichnet wird, das heißt z.B. eines EF, nicht unmittelbar zusammen mit den Nutzdaten des EF selbst gespeichert sind. Im Gegenteil dazu beinhalten die Nutzdaten des Datenobjektes lediglich einen Zeiger auf denjenigen Speicherbereich der Chipkarte, in dem die Nutzdaten gespeichert sind. Dies ermöglicht es z.B., die Kontrolldaten eines Datenobjektes temporär in den Arbeitsspeicher zu kopieren, die gewünschten Änderungen der Kontrolldaten in der Kopie des Arbeitsspeichers vorzunehmen, und dann die geänderte Kopie der Kontrolldaten in den geschützten elektronischen Speicher zu speichern und zu aktivieren, wobei die ursprüngliche Version der Kontrolldaten in dem Speicher überschrieben, gelöscht oder deaktiviert wird.

Besonders vorteilhaft ist gemäß Ausführungsformen der Erfindung, dass die Kontrolldaten und die Nutzdaten unabhängig voneinander und in verschiedenen Speicherbereichen des Speichers gespeichert werden. Die nur lose Kopplung von Kontrolldaten mit ihren Nutzdaten über den Zeiger ermöglicht es, für den Vorgang des Änderns eine Kopie der Kontrolldaten in dem Arbeitsspeicher der Chipkarte zu halten. Obwohl der Arbeitsspeicher einer Chipkarte im Allgemeinen sehr klein ist, wird dennoch eine Speicherung der Kopie der zu ändernden Kontrolldaten in dem Arbeitsspeicher dadurch ermöglicht, dass hierzu nicht auch die Nutzdaten in den Arbeitsspeicher kopiert werden müssen. Dies hat den weiteren Vorteil, dass keine erneute Personalisierung der Chipkarte mit den Nutzdaten erfolgen muss, da diese unverändert und in dem ursprünglichen Speicherbereich in dem Speicher verbleiben können, obwohl die diesen Nutzdaten zugeordneten Kontrolldaten verändert werden.

Nach einer weiteren Ausführungsform beinhalten die Nutzdaten relokierbaren Programmcode, wobei nach Wiederherstellung der Nutzdaten der nicht-flüchtige elektronische Speicher unbelegte Speicherbereiche und mit relokierbarem Programmcode belegte Speicherbereiche umfasst. Das Verfahren umfasst dann weiter den Schritt des Defragmentierens des nicht-flüchtigen elektronischen Speichers. Dabei umfasst das Defragmentieren ein Verschieben des in den belegten Speicherbereichen gespeicherten relokierbaren Programmcodes, sodass mehrere der unbelegten Speicherbereiche einen zusammenhängenden unbelegten Speicherbereich bilden.

Es sei an dieser Stelle angemerkt, dass unter einem zusammenhängenden Speicherbereich neben einem physikalisch zusammenhängenden Speicherbereich auch ein logisch zusammenhängender Speicherbereich mit fortlaufenden Speicheradressen zu verstehen ist. Dabei können die physikalischen Adressen eines logisch zusammenhängenden Speichers auch nicht zusammenhängend sein, beispielsweise infolge eines bei Chipkarten üblichen Scramblings des Speichers.

Ein Verschieben kann entsprechend logisch oder physikalisch umgesetzt sein.

Ausführungsformen könnten den Vorteil haben, dass die Ausnutzung eines Speichers einer Chipkarte, welcher zumeist ohnehin sehr begrenzt ist, in verbesserter Art und Weise möglich wird. Somit können auch über einen längeren Zeitraum wiederholt Anwendungen von der Chipkarte entfernt und neue Anwendungen in dem Speicher der Chipkarte nachgeladen werden wobei vermieden wird, dass aufgrund einer Fragmentierung des Speichers der effektiv nutzbare Speicher der Chipkarte schrumpft.

Nach einer Ausführungsform der Erfindung umfasst das Defragmentieren das Aneinanderreihen des in den belegten Speicherbereichen gespeicherten relokierbaren Programmcodes durch ein physikalisches Verschieben des relokierbaren Programmcodes. Der relokierbare Programmcode wird also von seinem ursprünglichen Speicherbereich an einen neuen, unbelegten Speicherbereich kopiert und in seinem ursprünglichen Speicherbereich gelöscht. Dabei kann der in einem belegten Speicherbereich abgelegte Programmcode auch ein einen Bereich verschoben werden, der zunächst nicht ausreichend groß ist, um den gesamten Datenblock aufzunehmen. In diesem Fall würde während des Verschiebens ein erster Teil des Programmcodes von seiner ursprünglichen Speicheradresse an eine neue Speicheradresse verschoben. Wird dies für folgende weitere Teile des Programmcodes wiederholt, ist es irgendwann möglich, dass ein Teil des Programmcodes in einen Speicherbereich kopiert wird, in dem der erste Teil des grade zu verschiebenden Programmcodes ursprünglich abgelegt war. Hierdurch wird der ursprüngliche Programmcode nach und nach überschrieben. Dies birgt jedoch die Gefahr, dass bei einem Stromausfall während des Verschiebevorgangs ein segmentierter und nicht mehr funktionsfähiger Programmcode entsteht.

Nach einer weiteren Ausführungsform ist die logische Reihenfolge der Speicherbereiche des Speichers der Chipkarte durch eine Zuordnungstabelle festgelegt. Das Defragmentieren des Speicherbereichs der Chipkarte umfasst dann das Aneinanderreihen der belegten Speicherbereiche durch Manipulation der Zuordnungstabelle. Beispielsweise kann in der Chipkarte eine Speicherverwaltungseinheit (Memory Management Unit MMU) vorgesehen sein, welche die Adressierung des Speichers durch den Prozessor anhand der Zuordnungstabelle umsetzt.

Sowohl das zuvor beschriebene Defragmentieren durch physikalisches Verschieben von Speicherbereichen als auch das Defragmentieren durch Manipulation einer Zuordnungstabelle kann unter bestimmten Umständen vorteilhaft sein. So kann durch einfaches logisches Umsortieren der Speicherbereiche des Speichers durch Manipulation der Zuordnungstabelle ein Speicher sehr schnell defragmentiert werden. Beispielsweise kann in den Zuordnungstabellen eine zusätzliche Sprungadresse eingefügt werden, sodass bei einem Aufruf einer Speicheradresse durch den Chipkartenprozessor der Chipkartenprozessor durch die MMU an die Speicherposition verwiesen wird, an der der entsprechende relokierbare Programmcode nach der Defragmentierung abgelegt ist. Allerdings kann es hier vorkommen, dass bei wiederholtem Defragmentieren durch Manipulation der Zuordnungstabelle eine Verkettung von Sprungbefehlen entsteht, sodass die Zugriffszeit, welche ein Prozessor einer Chipkarte benötigt, um den relokierbaren Programmcode im Speicher zu adressieren, zunimmt.

Das Defragmentieren durch physikalisches Verschieben umgeht hingegen dieses Problem, da keine zusätzlichen Sprungbefehle in einer Zuordnungstabelle entstehen, sondern der Programmcode tatsächlich im physikalischen Speicher verschoben wird. Handelt es sich allerdings bei dem zu verschiebenden relokierbaren Programmcode um sehr viele und/oder sehr große Speicherbereiche, ist ein physikalisches Verschieben mit einem erheblichen Aufwand verbunden. Ferner ist das Kopieren und anschließende Löschen von Programmcodes fehleranfällig, da während des Kopierens unter Umständen auch Fehler in den Programmcode eingefügt werden könnten beziehungsweise bei nicht-atomareren Verschiebungsvorgängen Programmblocke gelöscht oder verdoppelt werden könnten.

Daher ist es nach einer weiteren Ausführungsform der Erfindung vorgesehen, je nach Situation eines der beiden vorgenannten Defragmentierungsverfahren zu verwenden. Hierzu kann beispielsweise zunächst ein Schwellwert für die Länge eines belegten Speicherbereichs definiert werden, wobei die Entscheidung, ob ein belegter Speicherbereich durch Manipulation der Zuordnungstabelle oder durch physikalisches Verschieben defragmentiert werden soll, von dem besagten Schwellwert abhängt. So könnte beispielsweise das Verschieben von in belegten Speicherbereichen gespeicherten relokierbaren Programmcodes mit einer Länge, die größer ist als der Schwellwert durch Manipulation der Zuordnungstabelle erfolgen, während das Verschieben von in belegten Speicherbereichen gespeicherten relokierbaren Programmcodes mit einer Länge, die kleiner oder gleich dem Schwellwert ist durch physikalisches Verschieben des relokierbaren Programmcodes erfolgt. Somit kann je nach Anwendungsfall das jeweils beste Verfahren zur Defragmentierung des Speichers ausgewählt werden.

Ebenso sind andere Strategien möglich nach denen für die Verschiebung eines einzelnen Blocks festgelegt werden kann, ob die Umordnung des Blockes logisch oder physikalisch erfolgen soll. Dabei kann die Entscheidung, ob ein Block physikalisch oder logisch verschoben werden soll einer beliebig gestaltbaren Heuristik unterliegen.

Nach einer weiteren Ausführungsform der Erfindung umfasst das Defragmentieren zunächst das Ermitteln einer ersten Position eines im Sinne der Speicheradressierung ersten, unbelegten Speicherbereichs, d.h. den Block mit der kleinsten Speicheradresse. Anschließend wird eine zweite Position eines zweiten, belegten Speicherbereichs ermittelt, wobei der zweite belegte Speicherbereich in dem Speicher dem ersten freien Speicherbereich bezüglich der Speicheradressierung direkt nachfolgt. Anschließend wird der in dem zweiten belegten Speicherbereich gespeicherte, relokierbare Programmcode an die zuvor ermittelte erste Position verschoben. Dabei kann das Verschieben sowohl logisch als auch physikalisch erfolgen. Die Schritte des Ermitteln eines einem unbelegten Speicherbereich nachfolgenden belegten Speicherbereichs und das Verschieben des in dem so ermittelten belegten Speicherbereich abgelegten relokierbaren Programmcodes wird solange wiederholt, bis auf den ermittelten ersten unbelegten Speicherbereich kein belegter Speicherbereich mehr folgt.

Ausführungsformen der Erfindung könnten den Vorteil haben, dass durch den beschriebenen Algorithmus auf einfache Art und Weise ein Speicher einer Chipkarte defragmentiert werden kann. Somit kann die entsprechende Logik zur Durchführung des Defragmentierungsvorgangs in der Chipkarte mit einfachen Mitteln realisiert werden.

Nach einer weiteren Ausführungsform umfasst das Defragmentieren zunächst das Ermitteln der jeweiligen Positionen und Längen der belegten Speicherbereiche und das Ermitteln der jeweiligen Positionen und Längen der unbelegten Speicherbereiche. Anschließend wird ausgehend von der niedrigsten Speicheradresse der erste unbelegte Speicherbereich bestimmt und überprüft, ob einer der nachfolgenden Blöcke die gleiche Länge besitzt. Sollte dies der Fall sein, wird der Block verschoben. Das Verfahren wird für den nächsten nachfolgenden Speicherbereich iteriert. Die Iteration erfolgt bis ein unbelegter Speicherbereich erreicht ist, dem kein belegter Speicherbereich mehr folgt. Nach einer weiteren Ausführungsform könnten belegte Speicherbereiche an die Positionen von unbelegten Speicherbereichen gleicher oder größerer Länge verschoben werden.

Ausführungsformen der Erfindung könnten den Vorteil haben, dass die Zahl der Verschiebungsvorgänge durch das beschriebene Defragmentierungsverfahren gegenüber einem Verfahren, in dem die belegten Speicherbereiche sukzessive aneinandergeschoben werden, reduziert werden kann. So kann es beispielsweise vorkommen, dass nach einem ersten belegten Speicherbereich ein unbelegter Speicherbereich einer definierten Länge existiert, wobei auf den unbelegten Speicherbereich eine Kette von belegten Speicherbereichen folgt. Entspricht dabei beispielsweise die Länge des letzten belegten Speicherbereichs der Kette der Länge des unbelegten Speicherbereichs nach dem ersten belegten Speicherbereich, so kann die Defragmentierung gemäß dem zuvor beschriebenen Verfahren dadurch umgesetzt werden, dass einzig und allein der letzte belegte Speicherbereich an die Position des unbelegten Speicherbereichs verschoben wird. Alle übrigen belegten Speicherbereiche müssen hierbei nicht verschoben werden. Somit kann vermieden werden, dass während eines Defragmentierungsvorgangs jeder einzelne belegte Speicherbereich verschoben wird.

In einem weiteren Aspekt betrifft die Erfindung ein Verfahren zum Nachladen von durch einen Nachladeautomaten bereitgestellter Software auf eine Chipkarte durch den Nachladeautomaten, wobei die Chipkarte einen Prozessor, eine Kommunikationsschnittstelle und einen nicht-flüchtigen elektronischen Speicher mit einer darin gespeicherten logischen Datenstruktur, sowie Nutzdaten und Kontrolldaten, aufweist, wobei das Verfahren durch die Chipkarte umfasst:
a) Aufbauen eine Kommunikationsverbindung mit dem Nachladeautomaten über die Kommunikationsschnittstelle,
b) Erzeugen eines ersten Datensatzes durch den Prozessor durch verschlüsseln zumindest eines Teils der in dem nicht-flüchtigen elektronischen Speicher gespeicherten Nutzdaten und/oder zumindest eines Teils der in dem nicht-flüchtigen Speicher gespeicherten Kontrolldaten und/oder der logischen Datenstruktur,
c) Übermitteln des ersten Datensatzes an den Nachladeautomaten über die Kommunikationsverbindung zur Speicherung des ersten Datensatzes in dem Nachladeautomaten,
d) Nachladen der Software auf die Chipkarte in den nicht-flüchtigen elektronischen Speicher über die Kommunikationsverbindung,
e) Empfangen des ersten Datensatzes von dem Nachladeautomaten über die Kommunikationsverbindung,
f) Wiederherstellen der Nutzdaten und/oder der Kontrolldaten und/oder der logischen Datenstruktur in der Chipkarte durch entschlüsseln des ersten Datensatzes durch den Prozessor und Speichern der in dem ersten Datensatz enthaltenen Nutzdaten und/oder Kontrolldaten und/oder logischen Datenstruktur in dem nicht-flüchtigen elektronischen Speicher.

In einem weiteren Aspekt betrifft die Erfindung eine Chipkarte mit zumindest einem nicht-flüchtigen elektronischen Speicher mit einer darin enthaltenen logischen Datenstruktur, sowie Nutzdaten und Kontrolldaten, einem Prozessor und einer Kommunikationsschnittstelle, wobei die Chipkarte dazu ausgebildet ist, das zuvor beschriebene Verfahren durchzuführen.

In einem weiteren Aspekt betrifft die Erfindung ein Verfahren zum Nachladen von durch einen Nachladeautomaten bereitgestellte Software auf eine Chipkarte durch einen Nachladeautomaten, wobei das Verfahren durch den Nachladeautomaten umfasst:
a) Aufbauen eine Kommunikationsverbindung mit der Chipkarte,
b) Empfangen eines ersten Datensatzes von der Chipkarte über die Kommunikationsverbindung,
c) Speichern des ersten Datensatzes,
d) Nachladen der Software auf die Chipkarte durch Zugriff auf die Chipkarte,
e) Übermitteln des ersten Datensatzes an die Chipkarte über die Kommunikationsverbindung.

In einem weiteren Aspekt betrifft die Erfindung einen Nachladeautomaten, wobei der Nachladeautomat dazu ausgebildet ist, Software auf eine Chipkarte gemäß dem zuvor beschriebenen Verfahren nachzuladen.

Nach einer Ausführungsform weist der Nachladeautomat einen mechanischen Einzug auf, wobei der mechanische Einzug zur Aufnahme der Chipkarte ausgebildet ist, wobei der Einzug ferner dazu ausgebildet ist, bei dem Nachladevorgang die Chipkarte so lange vor einem Entfernen aus dem Nachladeautomat zu schützen, bis das Verfahren zum Nachladen abgeschlossen ist.

Dabei kann bei Verwendung einer kontaktlosen Kommunikation zwischen Nachladeautomat und Chipkarte trotz Verwendung eines mechanischen Einzugs der Verschleiß der Chipkarte auf ein Minimum reduziert werden. Die Kontaktflächen zwischen Chipkarte und Einzug des Nachladeautomaten ist nämlich für die Kommunikation zwischen Chipkarte und Nachladeautomat, sowie für die Einkopplung von Energie zum Betrieb der Chipkarte irrelevant. Somit führen Reibungseffekte auf der Oberfläche des Chipkartenkörpers nicht zu einer Beeinträchtigung der Funktionsfähigkeit der Chipkarte. Gleichzeitig kann durch die Kombination eines mechanischen Einzugs mit einer kontaktlosen Kommunikation die Integrität der auf der Chipkarte gespeicherten Daten gewahrt werden, da ein vorzeitiges Entfernen der Chipkarte aus dem Nachladeautomaten ausgeschlossen werden kann. Hierdurch können während des Nachladevorgangs eine unterbrechungsfreie Kommunikation und Energiezufuhr gewährleistet werden

Ausführungsformen könnten den Vorteil haben, dass durch das Einbehalten der Chipkarte in einem Einzug effektiv verhindert werden kann, dass ein Nachladevorgang durch Entfernen der Chipkarte aus dem Nachladeautomaten abgebrochen wird, bevor der Nachladevorgang abgeschlossen ist. Somit könnte ein Datenverlust aufgrund eines unvollständigen Nachladevorgangs vermieden werden, da die Stromversorgung der Chipkarte durch den Nachladeautomaten nicht unterbrochen wird, bis der Nachladevorgang abgeschlossen ist.

Nach einer Ausführungsform umfasst der der Nachladeautomat eine Energiequelle, wobei es sich bei der Energiequelle um eine abgeschlossene interne Energiequelle und/oder um eine externe Energiequelle handelt.

Ausführungsformen könnten den Vorteil haben, dass bei Verwendung einer internen Energiequelle der Nachladeautomat als tragbares Gerät ausgeführt sein kann, welches vollständig autark ist. Eine solche Autarkie würde die Sicherheit des Nachladeautomaten gegen Zugriff durch Unbefugte verbessern, da eine Kommunikation lediglich zwischen Chipkarte und Nachladeautomat erfolgt. Ferner kann eine Kombination von interner Energiequelle, wie beispielsweise einer Batterie und externer Energiequelle, wie beispielsweise einem Netzanschluss die Ausfallsicherheit des Nachladeautomaten verbessern, da die Wahrscheinlichkeit, dass beide Energiequellen versagen geringer ist als die Wahrscheinlichkeit des Ausfalls einer der Energiequellen.

Nach einer Ausführungsform umfasst der Nachladeautomat einen Nachladetoken, wobei der Nachladetoken die auf die Chipkarte nachzuladende Software beinhaltet, wobei der Nachladetoken als austauschbarer physischer Datenträger ausgebildet ist. Beispielsweise kann es sich bei dem Datenträger um eine Chipkarte handeln.

Ausführungsformen könnten den Vorteil haben, dass ein und derselbe Nachladeautomat für das Nachladen einer Vielzahl verschiedener Software-Konfigurationen genutzt werden könnte. Um eine andere Software-Konfiguration auf eine Chipkarte nachladen zu können müsste lediglich der Nachladetoken des Nachladeautomaten ausgetauscht werden.

Nach einer Ausführungsform umfasst der Nachladeautomat ein Authentisierungstoken, wobei der Authentisierungstoken Daten für eine Authentisierung eines Benutzers des Nachladeautomaten beinhaltet, wobei der Authentisierungstoken als austauschbarer physischer Datenträger ausgebildet ist. Auch hier kann es sich bei dem Datenträger beispielsweise um eine Chipkarte handeln.

Ausführungsformen könnten den Vorteil haben, dass durch Austausch des Authentisierungstoken der Nachladeautomat von einer Vielzahl verschiedener Benutzer verwendet werden kann. Dabei ist jedoch auch sichergestellt, dass nur derjenige Benutzer den Nachladeautomaten nutzen kann, dessen Authentisierungstoken aktuell mit dem Nachladeautomaten verbunden ist. Dabei kann vorgesehen sein, dass der Nachladeautomat selbstständig prüft, ob ein Benutzer, dessen Authentisierungstoken grade in den Nachladeautomat eingesetzt ist auch tatsächlich zu einer Nutzung des Nachladeautomaten berechtigt ist.

Im Folgenden werden bevorzugte Ausführungsformen anhand der Zeichnungen näher erläutert. Es zeigen:
- Fig. 1: ein Blockdiagramm eines erfindungsgemäßen Systems aus Nachladeautomat und Chipkarte;
- Fig. 2: eine schematische Darstellung des Verfahrens zum Nachladen von Software auf die Chipkarte;
- Fig. 3: ein Blockdiagramm einer weiteren Ausführungsform eines erfindungsgemäßen Chipkartensystems und eines Dokuments,
- Fig. 4: eine Ausführungsform eines weiteren erfindungsgemäßen Verfahrens,
- Fig. 5: eine schematische Darstellung eines ersten Defragmentierungsverfahrens, und,
- Fig. 6: schematische Darstellung eines zweiten Defragmentierungsverfahrens,

Im Folgenden werden einander ähnliche Elemente mit gleichen Bezugszeichen gekennzeichnet.

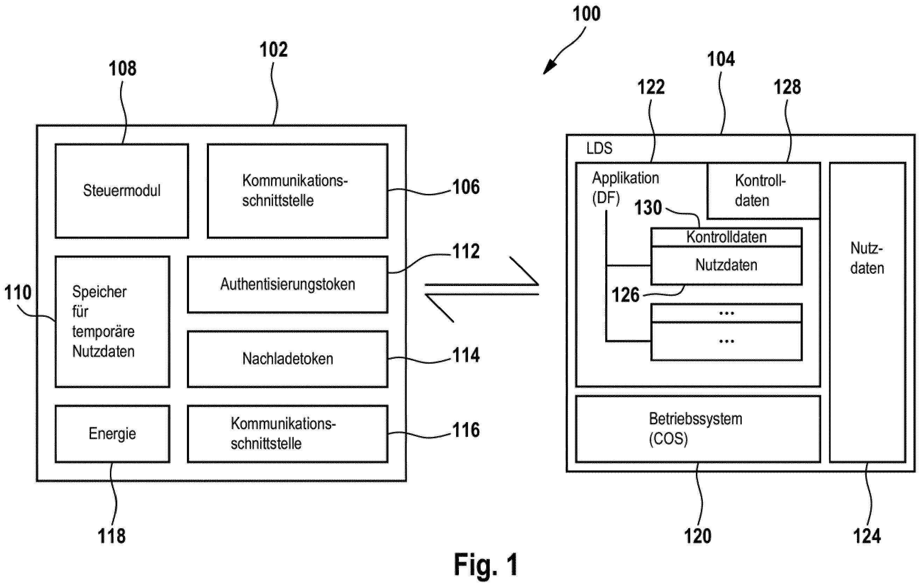

Die Fig. 1 zeigt ein System 100 aus einem Nachladeautomaten 102 und einer Chipkarte 104. Der Nachladeautomat 102 beinhaltet in der hier dargestellten Ausführungsform eine Kommunikationsschnittstelle 106, ein Steuermodul 108 und ein Speichermodul für temporäre Nutzdaten 110. Ferner umfasst der dargestellte Nachladeautomat 102 ein Authentisierungstoken 112, ein Nachladetoken 114, eine weitere Kommunikationsschnittstelle 116 sowie eine Energiequelle 118. Der Authentisierungstoken 112 und die zweite Kommunikationsschnittstelle 116 stellen hierbei optionale Merkmale des Nachladeautomaten 102 dar.

Bei der Energiequelle 118 kann es sich beispielsweise um eine Batterie oder eine stromerzeugende Einheit wie beispielsweise eine Brennstoffzelle oder eine Solarzelle handeln. Die Verwendung einer solchen abgeschlossenen Energiequelle 118 könnte den Vorteil haben, dass der Nachladeautomat 102 zum einen vollständig autark und zum anderen portabel gestaltet werden kann. Es kann sich bei der Energiequelle 118 jedoch auch um ein Netzteil oder eine andersartige Verbindung zu einer externen Energieversorgung handeln. Ferner ist auch eine Kombination aus externer und interner Energieversorgung möglich, was die Ausfallsicherheit des Nachladeautomaten 102 verbessern würde.

Bei dem Speichermodul für temporäre Nutzdaten 110 kann es sich sowohl um einen flüchtigen als auch einen nichtflüchtigen Speicher handeln. Ist beispielsweise als Energiequelle 118 des Nachladeautomaten 102 eine Verbindung mit einem Stromnetz vorgesehen, kann es sinnvoll sein das Speichermodul für temporäre Nutzdaten 110 als nicht-flüchtigen Speicher auszubilden. Würde nämlich bei einem Nachladevorgang nach Übertragung des ersten Datensatzes an den Nachladeautomaten die Stromversorgung des Nachladeautomaten 102 unterbrochen, würde der erste Datensatz aus einem flüchtigen Speicher gelöscht werden, womit die in dem ersten Datensatz enthaltenen Nutzdaten verloren wären. Dies würde durch einen nicht-flüchtigen Speicher vermieden.

Ist jedoch die Energiequelle 118 als interne Energiequelle, bspw. in Form eines Ackus ausgebildet, kann das Speichermodul für temporäre Nutzdaten 110 auch als flüchtiger Speicher ausgebildet sein. Dies hätte insbesondere den Vorteil, dass nach dem Abschalten des Nachladeautomaten nach erfolgreicher Aktualisierung der Software einer Chipkarte 104 die in dem Nachladeautomaten 102 abgelegten Nutzdaten 124, 126 der Chipkarte 104 automatisch gelöscht würden. Somit würde ein Missbrauch der Nutzdaten durch nachträgliches Auslesen aus dem Nachladeautomaten 102 verhindert.

Die Chipkarte 104 beinhaltet ein Chipkartenbetriebssystem 120 sowie eine logische Datenstruktur 122 und Nutzdaten 124. Ferner sind auch in der logischen Datenstruktur 122 Nutzdaten 126 gespeichert. Dabei können die Nutzdaten 126, welche in der logischen Datenstruktur 122 gespeichert sind, durch Verweise mit den außerhalb der logischen Datenstruktur 122 gespeicherten Nutzdaten 124 verknüpft sein. In der logischen Datenstruktur 122 sind weiter Kontrolldaten 128 und 130 gespeichert, wobei die Kontrolldaten 128 einer Applikation zugeordnet sein können, während die Kontrolldaten 130 einem Satz von Nutzdaten zugeordnet sind.

Wie in Fig. 1 schematisch angedeutet, wird durch die Kommunikationsschnittstelle 106 des Nachladeautomaten 102 eine Kommunikation zwischen dem Nachladeautomat 102 und der Chipkarte 104 möglich. Beispielsweise kann durch die Kommunikationsschnittstelle 106 die Chipkarte 104 angesprochen werden, wodurch ein Nachladevorgang angestoßen werden kann. Hierbei kann die Kommunikationsschnittstelle 106 beispielsweise gemäß ISO 14443 ausgebildet sein. Die weitere Kommunikationsschnittstelle 116 des Nachladeautomaten 102 kann beispielsweise zur Administration des Nachladeautomaten 102 ausgebildet sein. Es kann sich beispielsweise bei der Kommunikationsschnittstelle 116 um einen Ethernet-Anschluss handeln. Der Authentisierungstoken 112 sowie auch der Nachladetoken 114 können sowohl als Softwaretoken als auch als Hardwaretoken zum Beispiel in Form einer Chipkarte zum Einstecken in den Nachladeautomaten 102 ausgeprägt sein. Beispielsweise kann der Nachladetoken 114 von einem Hersteller der zu erneuernden Chipkarte 104 geliefert werden und enthält dann die nachzuladende Software. Es ist jedoch auch möglich, dass der Nachladetoken 114 fest in dem Nachladeautomaten 102 eingebaut ist, so dass eine herstellerspezifische Nachladesoftware über die Kommunikationsschnittstelle 116 auf den Nachladeautomaten 102 übertragen werden müsste. Der Nachladetoken 114 kann dabei auch als Speicherbereich innerhalb des Nachladeautomaten 102 ausgebildet sein.

Die Kommunikationsschnittstelle 106, über welche eine Kommunikation des Nachladeautomaten 102 mit der Chipkarte 104 gewährleistet werden soll, kann zusätzlich einen mechanischen Einzug zur teilweisen oder vollständigen Aufnahme der Chipkarte 104 in den Nachladeautomaten 102 besitzen. Dabei kann der Einzug dergestalt sein, dass er die Chipkarte 104 zumindest für die Dauer des Nachladevorgangs vor einer Entnahme aus dem Nachladeautomaten 102 durch einen Chipkartenbenutzer schützt. Hierdurch können während des Nachladevorgangs eine unterbrechungsfreie Kommunikation und Energiezufuhr gewährleistet werden.

Wie zuvor bereits ausgeführt wurde, ist der Nachladeautomat 102 dazu ausgebildet, zumindest Teile der in der Chipkarte 104 gespeicherten logischen Datenstruktur 122 sowie das in der Chipkarte 104 gespeicherte Betriebssystem 120 durch ein erneuertes Betriebssystem oder eine neuere logische Datenstruktur im Zuge eines Nachladevorgangs zu ersetzen. Der Nachladevorgang ist dabei ein mehrschrittiger Prozess, dem eine Initialisierung vorangestellt ist. In der Initialisierung wird die Nachladesoftware entweder als Softwaretoken über die Kommunikationsschnittstelle 116 auf den Nachladeautomaten 102 aufgespielt oder als Hardwaretoken 114 in den Nachladeautomaten 102 eingebracht. Die Nachladesoftware kann dabei genau einen Chipkartentyp und Version unterstützen, oder als Paket ausgeprägt sein, um mehrere Chipkartentypen und Versionen zu unterstützen.

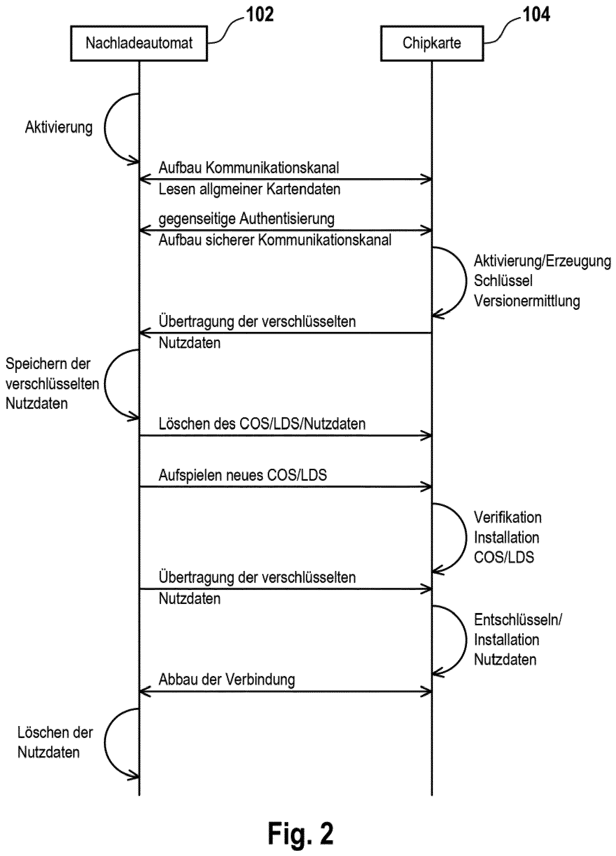

Im Folgenden wird nun anhand der Fig. 2 eine Ausführungsform des erfindungsgemäßen Nachladevorgangs beschrieben.

In einem ersten Verfahrensschritt des in Fig. 2 dargestellten Verfahrensablaufs zum Nachladen von Software eines Nachladeautomaten 102 auf eine Chipkarte 104 wird der Nachladeautomat 102 aktiviert. Hierbei kann beispielsweise die Aktivierung durch Betätigung eines Netzschalters erfolgen oder der Nachladeautomat 102 kann so ausgebildet sein, dass er bei einem Einführen einer Chipkarte 104 in einen entsprechenden mechanischen Einzug aus einem Ruhezustand aufgeweckt wird. Anschließend kann eine Bedienerauthentisierung, beispielsweise durch eine Passwortabfrage vorgesehen sein, die bei Erfolg den Nachladeprozess anstößt. Hierzu muss der Nachladeautomat 102 allerdings über eine geeignete Eingabemöglichkeit, wie beispielsweise eine Tastatur, sowie über den Authentisierungstoken 112 verfügen.

Nachdem der Nachladeautomat 102 aktiviert wurde, wird ein Kommunikationskanal zwischen Nachladeautomat 102 und Chipkarte 104 aufgebaut. Dies kann beispielsweise durch Einführen der Chipkarte 104 in den Schlitz eines Kartenlesers oder durch Aufbauen einer Drahtlosverbindung erfolgen. Nachdem die Kommunikationsverbindung aufgebaut wurde, liest der Nachladeautomat 102 allgemein verfügbare Kartendaten der Chipkarte 104 aus, um beispielsweise die Unterstützung des Chipkartentyps und der Version zu ermitteln. Dabei kann es aus Datenschutzgründen vorgesehen sein, dass die exakte Versionsnummer des Betriebssystems 120 oder der logischen Datenstruktur 122 der Chipkarte 104 zunächst nicht ausgelesen werden dürfen.

Anschließend erfolgt eine gegenseitige Authentisierung des Nachladeautomaten 102 und der Chipkarte 104, so dass zwischen dem Nachladeautomat 102 und der Chipkarte 104 ein sicherer Kanal aufgebaut werden kann. Hierzu kann in dem Nachladeautomaten 102 beispielsweise in dem Authentisierungstoken 112 entsprechende Authentisierungsdaten hinterlegt sein, welche im Zuge der gegenseitigen Authentisierung Verwendung finden. Durch die Authentisierung des Nachladeautomaten 102 gegenüber der Chipkarte 104 wird eine notwendige Autorisierung des Nachladeautomaten 102 zum Nachladen von Daten in die Chipkarte 104 erwirkt. Dabei kann vorgesehen sein, dass die Authentisierung der Chipkarte 104 gegenüber dem Nachladeautomaten 102 den korrekten unterstützenden Chipkartentyp beweist. Hierzu kann beispielsweise in der Chipkarte 104 ein Authentisierungswert generiert werden, in welchem chipkartenspezifische Attribute einfließen. Nach Aufbau des sicheren Kommunikationskanals kann ferner die exakte Versionsnummer des Betriebssystems der logischen Datenstruktur sowie die Nutzdatenversion der Chipkarte 104 gelesen werden. Das Steuermodul 108 des Nachladeautomaten 102 ermittelt dann die zum Chipkartentyp und zur Version passende Nachladesoftware sowie den Modus des Nachladens, beispielsweise Patch, Update oder Upgrade.

In einem folgenden Verfahrensschritt generiert oder aktiviert die Chipkarte 104 einen bereits existierenden chipindividuellen Schlüssel zur Verschlüsselung der gesamten oder Teile der Nutzdaten 124, 126 und/oder der gesamten oder Teile der logischen Datenstruktur 122. Optional können auch separate Verschlüsselungsschlüssel für die Nutzdaten 124, 126 und die logische Datenstruktur 122 generiert werden. Zusätzlich kann zu jedem Verschlüsselungsschlüssel ein Schlüssel für einen Integritätsschutz generiert werden. Dieser Schlüssel kann beispielsweise dazu verwendet werden, den ersten Datensatz, welcher aus dem Verschlüsseln von Nutzdaten und logischer Datenstruktur resultiert, zu signieren. Anschließend werden die gesamten oder Teile der Nutzdaten 124, 126 und/oder die gesamten oder Teile der logischen Datenstruktur 122 verschlüsselt über den sicheren Kanal an den Nachladeautomaten 102 übertragen. Anschließend speichert der Nachladeautomat 102 die empfangenen Daten (erster Datensatz) in dem Speicher 110.

Anschließend werden die Nutzdaten 124, 126, die logische Datenstruktur 122 und das Betriebssystem 120 in der Chipkarte 104 gelöscht, entsprechend dem zuvor ermittelten Modus des Nachladens. Das Löschen der Daten aus der Chipkarte 104 kann dabei durch die Chipkarte 104 selbst oder durch den Nachladeautomaten 102 erfolgen.

Anschließend werden das neue gesamte oder Teile des Betriebssystems 120 und/oder gesamte oder Teile der logischen Datenstruktur 122 aus dem Nachladetoken 114 des Nachladeautomaten 102 zur Chipkarte 104 über den sicheren Kanal gemäß dem zuvor ermittelten Nachlademodus übertragen.

Die Chipkarte 104 verifiziert die so erhaltenen Daten und installiert das neue Betriebssystem 120 und/oder logische Datenstruktur 122 in der Chipkarte 104. Die Verifikation der Daten kann dabei beispielsweise durch eine Verifikation einer Signatur der Daten erfolgen. Dabei wird die Signatur beispielsweise durch einen Hersteller der Nachladesoftware erzeugt und der Verifikationsschlüssel im Betriebssystem oder in einem Bootloader der Chipkarte 104 hinterlegt.

Nachdem das neue Betriebssystem 120 und/oder die neue logische Datenstruktur 122 auf der Chipkarte 104 aufgespielt wurden, werden die verschlüsselten Daten in Form des ersten Datensatzes aus dem Speicher 110 des Nachladeautomaten 102 gelesen und über den sicheren Kanal zur Chipkarte 104 übertragen. Anschließend entschlüsselt die Chipkarte 104 die Daten, welche in dem ersten Datensatz enthalten sind und installiert die gesamten oder Teile der Nutzdaten 124, 126 und/oder die gesamten oder Teile der logischen Datenstruktur 122. Dabei kann nach einer Ausführungsform vorgesehen sein, dass die Chipkarte 104 anhand einer Signatur zunächst überprüft, ob der erste Datensatz korrumpiert wurde oder nicht.

Anschließend wird die Verbindung und der sichere Kanal zwischen Nachladeautomat 102 und Chipkarte 104 abgebaut und der erste Datensatz wird aus dem Speicher 110 des Nachladeautomaten 102 gelöscht.

Ist nach einer Ausführungsform vorgesehen, dass im Zuge eines Nachladevorgangs auch die Kontrolldaten 128, 130 der Nutzdaten an die nachgeladenen Funktionalitäten der Chipkarte 104 angepasst werden, stößt der Nachladeautomat 102 im Zuge des Zurückspielens des ersten Datensatzes auf die Chipkarte 104 die Aktualisierung der Kontrolldaten 128, 130. Beispielsweise kann hierzu mit Übermittlung des ersten Datensatzes von dem Nachladeautomat 102 an die Chipkarte 104 ein Flag übermittelt werden, welches die Chipkarte 104 dazu veranlasst, bei der Wiederherstellung der Nutzdaten 124, 126 aus dem ersten Datensatz die Kontrolldaten 128, 130 entsprechend der nachgeladenen Funktionalitäten anzupassen. Dabei muss jedoch die Verbindung zwischen Nachladeautomat 102 und Chipkarte 104 solange aufrechterhalten werden, bis die Aktualisierung der Kontrolldaten 128, 130 abgeschlossen wurde.

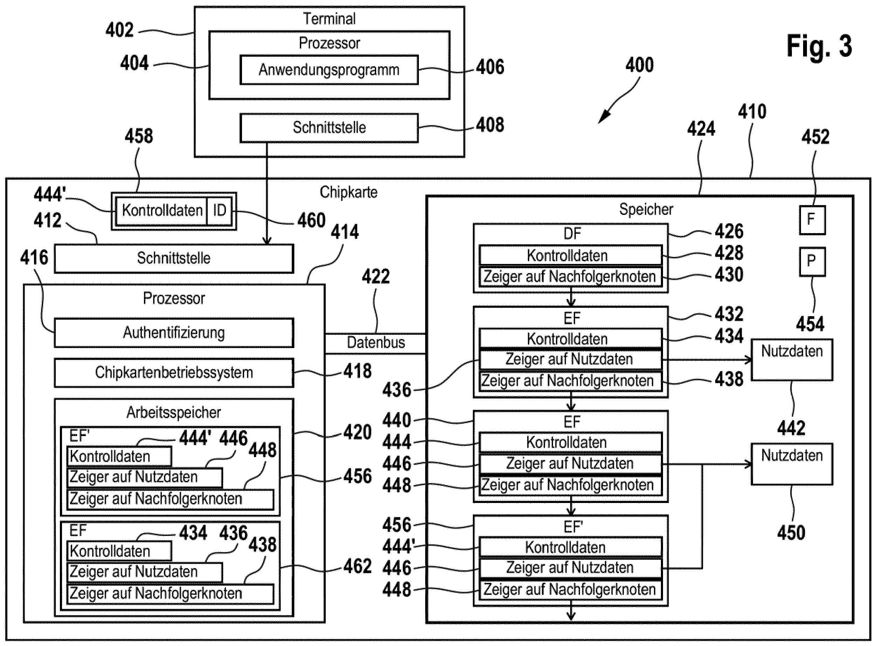

Die Fig. 3 zeigt ein Chipkartensystem 400 mit einem Terminal 402. Bei dem Terminal 402 kann es sich beispielsweise um ein Lesegerät für ein hoheitliches Dokument, insbesondere für einen elektronischen Personalausweis, einen elektronischen Aufenthaltstitel oder einen elektronischen Reisepass, handeln. Das Terminal 402 hat einen Prozessor 404 zur Durchführung eines Anwendungsprogramms 406, welches mit einem Dokument 410 interoperabel ist, sowie eine Schnittstelle 408 zum Aufbau einer Kommunikationsverbindung mit einer entsprechenden Schnittstelle 412 des Dokuments 410.

Die Schnittstellen 408 und 412 können als kontaktbehaftete oder kontaktlose Schnittstellen ausgebildet sein, insbesondere gemäß ISO14443 bspw. als NFC-Schnittstellen. Vorzugsweise verfügt das Dokument 410 nicht über eine eigene Energieversorgung, sondern wird durch Einkopplung elektromagnetischer Energie von der Schnittstelle 408 in die Schnittstelle 412 mit elektrischer Energie versorgt, wozu die Schnittstelle 412 im Falle der drahtlosen Ausprägung eine Antenne aufweist.

Das Dokument 410 hat einen Prozessor 414 zur Durchführung eines Programmmoduls 416 für die Authentifizierung des Terminals 402 oder die gegenseitige Authentifizierung des Terminals 402 und des Dokuments 410. Hierzu kann das Programmmodul 416 beispielsweise diejenigen Schritte eines Challenge-Response-Protokolls implementieren, welche das Dokument 410 betreffen, wobei das Anwendungsprogramm 406 dann diejenigen Schritte des Challenge-Response-Protokolls implementieren kann, welche das Terminal 402 betreffen. Eine andere Möglichkeit ist die Authentifizierung mittels einer geheimen Kennung, z.B. einer sog. PIN, die ein Nutzer in das Terminal eingibt, und die von dem Programmmoduls 416 überprüft wird, z.B. nach dem PACE Protokoll, wie es vom Bundesamt für Sicherheit in der Informationstechnik (BSI) spezifiziert worden ist.

Der Prozessor 414 dient ferner zur Ausführung eines Chipkartenbetriebssystems 418 und hat einen flüchtigen Arbeitsspeicher 420. Der Prozessor 416 ist mit der Schnittstelle 412 des Dokuments 410 verbunden, sowie über einen internen Datenbus 422 mit einem nichtflüchtigen geschützten elektronischen Speicher 424.

In dem Speicher 424 sind Dateien eines Chipkartendateisystems gespeichert, die einen Dateibaum bilden. Die Fig. 3 zeigt exemplarisch eine DF 426 des Dateibaums, die Kontrolldaten 428 einschließlich einem Zeiger 430 auf einen Nachfolgerknoten, das heißt die EF 432, beinhaltet. Die EF 432 beinhaltet ebenfalls Kontrolldaten 434, einschließlich einem Zeiger 438 auf deren Nachfolgerknoten in dem Dateibaum, nämlich ein EF 440 sowie einen Zeiger 436 auf Nutzdaten 442, die der EF 432 zugeordnet sind, die aber nicht in der EF 432 oder einer anderen Datei des Dateibaums gespeichert sind.

Eine dazu analoge Struktur hat die EF 440, die Kontrolldaten 444 beinhaltet, einschließlich eines Zeigers 446, auf die der EF 440 zugeordneten Nutzdaten 450 und einen Zeiger 448 auf einem in der Fig. 3 nicht gezeigten Nachfolgerknoten der EF 440 in dem Dateibaum.

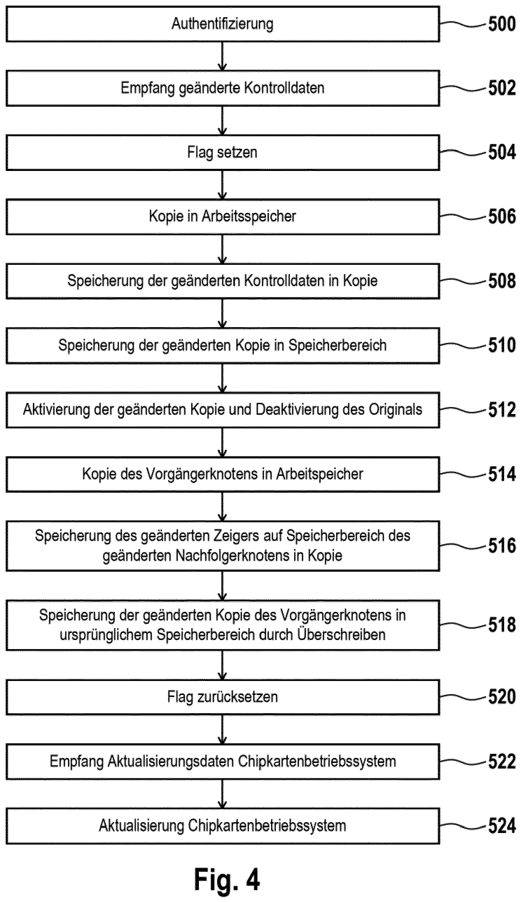

Zur Aktualisierung der Kontrolldaten 444 der EF 440 kann beispielsweise wie folgt vorgegangen werden, wie in der Fig. 4 gezeigt:
In dem Schritt 500 erfolgt zunächst eine Authentifizierung des Terminals 402 gegenüber dem Dokument 410. Neben der Authentifizierung kann auch eine Berechtigungsprüfung erfolgen, nämlich dahingehend, ob das Terminal 402 die erforderlichen Rechte zur Änderung von Kontrolldaten hat. Dies kann beispielsweise so erfolgen, dass das Terminal 402 ein Berechtigungszertifikat an das Dokument 410 überträgt, wobei in dem Berechtigungszertifikat die Rechte des Terminals 402 zur Änderung der Kontrolldaten angegeben sind.

In dem Schritt 502 empfängt das Dokument 410 von dem Terminal 402 geänderte Kontrolldaten, beispielsweise indem das Anwendungsprogramm 406 eine Kommando-APDU 458 von der Schnittstelle 408 an die Schnittstelle 412 sendet, welche die geänderten Kontrolldaten beinhaltet sowie auch eine Spezifikation der Datei des Chipkartendateisystems, deren Kontrolldaten zu ändern sind. Ohne Beschränkung der Allgemeinheit wird im Weiteren beispielhaft davon ausgegangen, dass es sich hierbei um die EF 440 bzw. deren Kontrolldaten 444 handelt.

In dem Schritt 504 setzt das Chipkartenbetriebssystem 418 ein Flag F 452 in dem Speicher 424. Ferner kann auch eine Protokolldatei P in dem Speicher 424 angelegt werden, um die nachfolgenden Schritte zur Änderung der Kontrolldaten zu protokollieren.

In dem Schritt 506 greift das Chipkartenbetriebssystem 418 über den internen Datenbus 422 auf den Speicher 424 zu, und liest die EF 440. Das Chipkartenbetriebssystem 418 speichert dann eine Kopie 456 der EF 440 in dem Arbeitsspeicher 420 ab. Die Kontrolldaten 444 der Kopie 456 werden dann aktualisiert. Hierzu beinhaltet die Kommando-APDU 458 die geänderten Kontrolldaten 444' und einen Identifikator (ID) 460 derjenigen Datei, deren Kontrolldaten zu ändern sind, hier der EF 440.

Das Chipkartenbetriebssystem 418 schreibt die geänderten Kontrolldaten 444' der APDU 458 in die Kopie 456 der EF 440, die temporär in dem Arbeitsspeicher 420 gespeichert ist und ersetzt hierdurch die vorherige Version der Kontrolldaten 444. Die Zeiger 446 und 448 bleiben hingegen unverändert (Schritt 508).

In dem Schritt 510 wird dann die geänderte Kopie EF` 456 der EF 440 in einem Speicherbereich des Speichers 424 gespeichert, der von dem Speicherbereich, in dem die EF 440 gespeichert ist, verschieden ist. Dies ist insbesondere dann erforderlich, wenn die Kontrolldaten 444' ein größeres Volumen haben als die Kontrolldaten 444, sodass die geänderte Kopie 456 größer ist als die Vorgängerversion, das heißt die EF 440. In dem Schritt 514 wird die geänderte Kopie 456, die in dem Speicher 424 gespeichert ist, aktiviert und das Original, das heißt die EF 440, deaktiviert oder gelöscht.

Da sich der Speicherbereich, in dem der Nachfolgerknoten der EF 432 gespeichert ist, geändert hat, wird nunmehr auch die EF 432 aktualisiert, indem in dem Schritt 514 eine Kopie 462 der EF 432 temporär in dem Arbeitsspeicher 420 gespeichert wird und in dem Schritt 516 der Zeiger 438 auf den Nachfolgerknoten in der Kopie 462 aktualisiert wird, indem der vorherige Zeiger auf die EF 440 durch einen Zeiger auf den Speicherbereich in dem Speicher 424 der Kopie EF` 456 ersetzt wird. Die übrigen Kontrolldaten 434 einschließlich dem Zeiger auf die Nutzdaten 436 können unverändert bleiben.

In dem Schritt 518 wird dann die geänderte Kopie 462 der EF 432 in dem Speicher 424 gespeichert, wobei dies so erfolgen kann, dass die EF 432 durch die Kopie 462 überschrieben wird. Dies ist möglich, da lediglich der Zeiger 438 aktualisiert wurde, sodass die Dateigröße der EF 432 und der geänderte Kopie 462 identisch sind.

Nachdem hierdurch der Änderungsvorgang der Kontrolldaten abgeschlossen worden ist, wird in dem Schritt 520 das Flag 452 zurückgesetzt und die Protokolldatei 454 wird gelöscht.

Anschließend kann auch eine Aktualisierung des Chipkartenbetriebssystems 418 erfolgen. Dies kann dann erforderlich sein, wenn die ursprüngliche Version des Chipkartenbetriebssystems 418 keine Funktion beinhaltet, um eine durch die geänderten Kontrolldaten 444' spezifizierte kryptografische Zugriffsbedingung auf die Nutzdaten 450 zu prüfen.

Beispielsweise wird durch die Kontrolldaten 444 als Zugriffsbedingung eine sogenannte Basic Access Control (BAC) spezifiziert, wohingegen durch die Kontrolldaten 444' zusätzlich zu der BAC eine Extended Access Control (EAC) gefordert wird, um auf die Nutzdaten 450 von extern lesend zugreifen zu können.

Falls die Vorversion des Chipkartenbetriebssystems 418 nur BAC, nicht aber EAC unterstützt, ist dann eine Aktualisierung des Chipkartenbetriebssystems 418 erforderlich, um auch die EAC-Funktionalität zur Verfügung zu stellen. Hierzu empfängt das Dokument 410 von dem Terminal 402 Aktualisierungsdaten für das Chipkartenbetriebssystem 418, welche Programmcodes für die Implementierung der zusätzlichen Funktion beinhalten. Anhand dieser Aktualisierungsdaten erfolgt dann in dem Schritt 524 eine Aktualisierung des Chipkartenbetriebssystems 418.

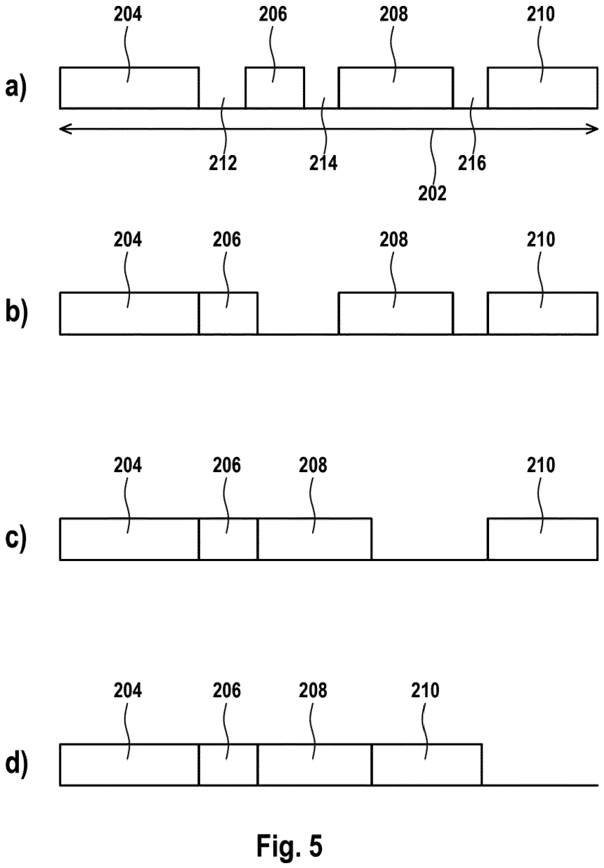

Die Fig 5 ist eine schematische Darstellung eines ersten möglichen Defragmentierungsverfahrens. Dabei wird angenommen, dass der nicht-flüchtige elektronische Speicher 110 der Chipkarte 104 eine Größe bzw. ein Speichervolumen aufweisen, welches durch den Pfeil 202 angedeutet wird. Wie in Fig. 5 a) dargestellt, umfasst der Speicher vier belegte Speicherbereiche 204, 206, 208 und 210. Zwischen diesen belegten Speicherbereichen befinden sich drei unbelegte Speicherbereiche 212, 214 und 216.

Es sei an dieser Stelle angemerkt, dass im Folgenden die Verschiebung der Blöcke 204, 206, 208 und 210 unabhängig voneinander jeweils sowohl physikalisch als auch logisch erfolgen kann.

In einem ersten Schritt des hier dargestellten Defragmentierungsverfahrens wird nun ein erster unbelegter Speicherbereich ermittelt, in diesem Fall der Speicherbereich 212. Anschließend wird der erste auf den unbelegten Speicherbereich 212 folgende belegte Speicherbereich 206 ermittelt. Dieser wird dann an die Anfangsposition des unbelegten Speicherbereichs 212 verschoben. Das Ergebnis dieses Schrittes ist in Fig. 5 b) dargestellt. In einem nachfolgenden Defragmentierungsschritt wird der belegte Speicherbereich 208 in den auf den belegten Speicherbereich 206 folgenden unbelegten Speicherbereich verschoben. Das Ergebnis dieser Verschiebung ist in Fig. 5 c) dargestellt.

Da auch in der in Fig. 5 c) dargestellten Situation nach wie vor der unbelegte Speicherbereich fragmentiert ist, wird auch der belegte Speicherbereich 210 in den verbleibenden, unbelegten Speicherbereich verschoben, sodass alle vier belegten Speicherbereiche 204, 206, 208 und 210 eine zusammenhängende Kette von belegten Speicherbereichen bilden. Dies ist in Figur 5 d) dargestellt. Erst durch diesen letzten Defragmentierungsschritt, dessen Ergebnis in Figur 5 d) dargestellt ist, wird der Speicher vollständig defragmentiert

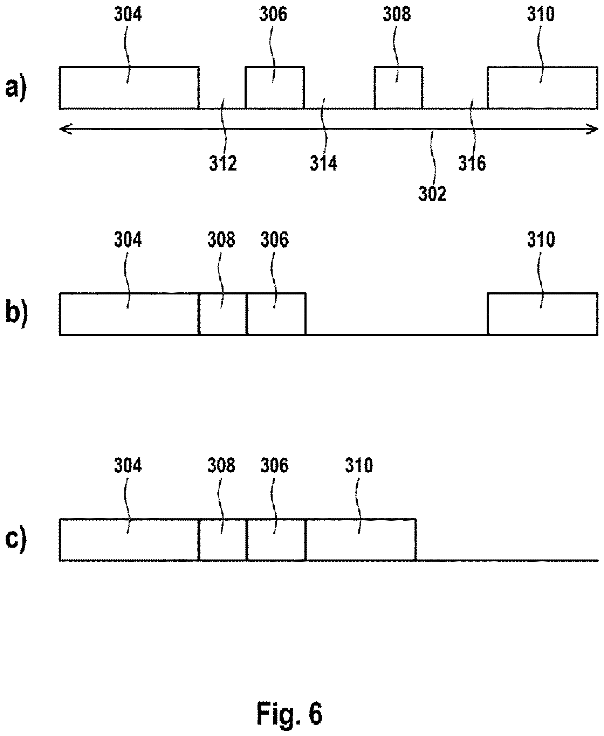

Die Fig. 6 ist eine schematische Darstellung eines weiteren möglichen Defragmentierungsverfahrens. Analog zu der in Fig. 5 dargestellten Ausgangssituation sind auch hier in einem Speicher einer definierten Größe, angedeutet durch den Pfeil 302, vier belegte Speicherbereiche 302, 304, 306 und 308 vorhanden. Wie ferner in Fig. 6 a) dargestellt, ist der Speicher zunächst fragmentiert.

Bei dem hier dargestellten Verfahren ist nun vorgesehen, dass zunächst die Größe der jeweiligen belegten Speicherbereiche 304, 306, 308 und 310 sowie die Größe der unbelegten Speicherbereiche 312, 314 und 316 ermittelt wird. Anschließend werden belegte Speicherbereiche an die Position eines unbelegten Speicherbereichs gleicher oder größerer Größe verschoben. Dies ist exemplarisch in Fig. 6 b) dargestellt. Dabei wurde bei der Ermittlung der Größen der belegten und unbelegten Speicherbereiche zuvor festgestellt, dass der belegte Speicherbereich 308 genauso groß ist wie der unbelegte Speicherbereich 312. Daher wurde der belegte Speicherbereich 308 an die Position des unbelegten Speicherbereichs 312 verschoben. Anschließend kann der weitere belegte Speicherbereich 310 an den entstandenen zusammenhängenden belegten Speicherbereich verschoben werden, sodass sich die in Fig. 6c) dargestellte Situation ergibt. Hierbei ist der Speicher vollständig defragmentiert.

Wäre man ausgehend von der in Fig. 6 a) dargestellten Situation analog zu dem in Fig. 5 beschriebenen Verfahren vorgegangen, wären alle drei Speicherbereich 306, 308 und 310 verschoben worden. Durch das in Fig. 6 dargestellte Verfahren konnte jedoch der belegte Speicherbereich 306 unangetastet bleiben.

### Bezugszeichenliste

- 100: System
- 102: Nachladeautomat
- 104: Chipkarte
- 106: Kommunikationsschnittstelle
- 108: Steuermodul
- 110: Speicher
- 112: Authentisierungstoken
- 114: Nachladetoken
- 116: Kommunikationsschnittstelle
- 118: Energiequelle
- 120: Betriebssystem (Chip Operating System COS)
- 122: Logische Datenstruktur (LDS)
- 124: Nutzdaten
- 126: Nutzdaten
- 128: Kontrolldaten
- 130: Kontrolldaten
- 202: Speichergröße
- 204: belegter Speicherbereich
- 206: belegter Speicherbereich
- 208: belegter Speicherbereich
- 210: belegter Speicherbereich
- 212: unbelegter Speicherbereich
- 214: unbelegter Speicherbereich
- 216: unbelegter Speicherbereich
- 302: Speichergröße
- 304: belegter Speicherbereich
- 306: belegter Speicherbereich
- 308: belegter Speicherbereich
- 310: belegter Speicherbereich
- 312: unbelegter Speicherbereich
- 314: unbelegter Speicherbereich
- 316: unbelegter Speicherbereich
- 400: Chipkartensystem
- 402: Terminal
- 404: Prozessor
- 406: Anwendung
- 408: Schnittstelle
- 410: Dokument
- 412: Schnittstelle
- 414: Prozessor
- 416: Programm
- 418: Chipkartenbetriebssystem
- 420: Arbeitsspeicher
- 422: Datenbus
- 424: Speicher
- 426: DF
- 428: Kontrolldaten
- 430: Zeiger
- 432: EF
- 434: Kontrolldaten
- 436: Zeiger
- 438: Zeiger
- 440: EF
- 440': EF
- 442: Nutzdaten
- 444: Kontrolldaten
- 444': geänderte Kontrolldaten
- 446: Zeiger
- 448: Zeiger
- 450: Nutzdaten
- 452: Flag (F)
- 454: Protokolldatei (P)
- 456: Kopie der EF 440
- 458: APDU
- 460: Identifikator
- 462: Kopie der EF 432

## Patentansprüche

1. Verfahren zum Nachladen von durch einen Nachladeautomaten (102) bereitgestellter Software auf eine Chipkarte (104, 410) durch den Nachladeautomaten (102), wobei die Chipkarte (104, 410) einen Prozessor (414), eine Kommunikationsschnittstelle (412) und einen nicht-flüchtigen elektronischen Speicher (424) mit einer darin gespeicherten logischen Datenstruktur (122), sowie Nutzdaten (124, 126, 442, 450) und Kontrolldaten (128,130) aufweist, wobei der Nachladeautomat (102) ein Authentisierungstoken (112) umfasst, wobei der Authentisierungstoken (112) Daten für eine Authentisierung eines Benutzers des Nachladeautomaten (102) beinhaltet, wobei der Authentisierungstoken (112) als austauschbarer physischer Datenträger ausgebildet ist, wobei nur derjenige Benutzer den Nachladeautomaten nutzen kann, dessen Authentisierungstoken aktuell mit dem Nachladeautomaten verbunden ist, wobei das Verfahren umfasst:
a) Aufbauen einer Kommunikationsverbindung zwischen dem Nachladeautomaten (102) und der Chipkarte (104) über die Kommunikationsschnittstelle (412, 106), wobei das Aufbauen der Kommunikationsverbindung eine gegenseitige Authentisierung des Nachladeautomaten (102) und der Chipkarte (104, 410) beinhaltet, wozu in dem Authentisierungstoken (112) Authentisierungsdaten hinterlegt sind, welche im Zuge der gegenseitigen Authentisierung Verwendung finden, wobei durch die Authentisierung ein sicherer Kommunikationskanal zwischen Nachladeautomat (102) und Chipkarte (104) aufgebaut wird,
b) Erzeugen eines ersten Datensatzes durch den Prozessor (414) durch verschlüsseln zumindest eines Teils der in dem nicht-flüchtigen elektronischen Speicher (424) gespeicherten Nutzdaten (124, 126, 442, 450) und/oder zumindest eines Teils der in dem nicht-flüchtigen elektronischen Speicher (424) gespeicherten Kontrolldaten (128,130) und/oder der logischen Datenstruktur (122),
c) Übermitteln des ersten Datensatzes an den Nachladeautomaten (102) über die Kommunikationsverbindung, wobei der erste Datensatz ausschließlich über den sicheren Kommunikationskanal übermittelt wird,
d) Speichern des ersten Datensatzes in dem Nachladeautomat (102),
e) Nachladen der Software auf die Chipkarte (104, 410) durch Übertragen der nachzuladenden Software auf die Chipkarte (104, 410) über die Kommunikationsverbindung und Speichern der übertragenen Software in dem nicht-flüchtigen elektronischen Speicher (424), wobei der Nachladeautomaten (102) nur nach erfolgreicher Authentisierung gegenüber der Chipkarte (104, 410) Zugriff auf in der Chipkarte (104, 410) enthaltene Daten erhält,
f) Übermitteln des ersten Datensatzes an die Chipkarte (104, 410) über die Kommunikationsverbindung,
g) Wiederherstellen der Nutzdaten (124, 126, 442, 450) und/oder der Kontrolldaten (128,130) und/oder der logischen Datenstruktur (122) der Chipkarte (102, 410) durch entschlüsseln des ersten Datensatzes durch den Prozessor (414) und Speichern der in dem ersten Datensatz enthaltenen Nutzdaten (124, 126, 442, 450) und/oder Kontrolldaten (128,130) und/oder der logischen Datenstruktur (122) in dem nicht-flüchtigen elektronischen Speicher (424).

2. Verfahren nach Anspruch 1, wobei die Chipkarte (104, 410) ein Chipkartenbetriebssystem (120, 418) mit einem hierarchischen Chipkartendateisystem (122) und darin gespeicherten Anwendungen aufweist, wobei die nachzuladende Software ein Chipkartenbetriebssystem (120, 418) und/oder Anwendungen umfasst, welche ein auf der Chipkarte (104, 410) installiertes Chipkartenbetriebssystem (120, 418) und/oder einen ersten Teil der auf der Chipkarte (104, 410) installierten Anwendungen ersetzen soll, wobei das Nachladen der Software auf die Chipkarte (104,410) das Löschen der Nutzdaten (124, 126, 442, 450) und/oder der Kontrolldaten (128, 130) und/oder der logischen Datenstruktur (122), sowie die weiteren nachfolgenden Schritte umfasst:
• Zwischen Schritt d) und e) das Löschen des Chipkartenbetriebssystems (120, 418) und/oder des ersten Teils der Anwendungen,
• Zwischen Schritt e) und f) das Installieren der nachgeladenen Software auf der Chipkarte (104, 410) durch den Prozessor (414), oder
wobei die Chipkarte (104, 410) ein Chipkartenbetriebssystem (120, 418) mit einem hierarchischen Chipkartendateisystem (122) und darin gespeicherten Anwendungen aufweist, wobei die nachzuladende Software ein Chipkartenbetriebssystem (120, 418) und/oder Anwendungen umfasst, welche ein auf der Chipkarte (104, 410) installiertes erstes Chipkartenbetriebssystem (120, 418) und/oder einen ersten Teil der auf der Chipkarte (104, 410) installierten Anwendungen ersetzen soll, wobei das Nachladen der Software auf die Chipkarte (104, 410) umfasst:
• Löschen der in dem ersten Datensatz an den Nachladeautomaten (102) übermittelten Nutzdaten (124, 126, 442, 450) und/oder der Kontrolldaten (128, 130) und/oder der logischen Datenstruktur (122) aus dem nicht-flüchtigen elektronischen Speicher (424) nach Schritt c) oder d),
• in Schritt e) das Speichern der übertragenen Software in dem durch Löschen der in dem ersten Datensatz an den Nachladeautomaten (102) übermittelten Nutzdaten (124, 126, 442, 450) und/oder Kontrolldaten (128, 130) und/oder logischen Datenstruktur (122) freigewordenen Speicherbereich des ersten nicht-flüchtigen elektronischen Speichers (424),
• Installieren der nachgeladenen Software auf der Chipkarte (104, 410) durch den Prozessor (414),
• Durchführen einer Funktionsprüfung der installierten nachgeladenen Software, wobei bei Feststellung der korrekten Funktionalität der installierten nachgeladenen Software das Verfahren das Löschen des ersten Chipkartenbetriebssystems (120, 418) und/oder des ersten Teils der Anwendungen umfasst und wobei bei Feststellung einer fehlerhaften Funktionalität der installierten Software das Verfahren das Löschen der neu installierten nachgeladenen Software umfasst.

3. Verfahren nach einem der vorhergehenden Ansprüche, wobei der Nachladeautomat (102) nach Aufbau des sicheren Kommunikationskanals mit der Chipkarte (104, 410) zumindest einen Identifikator der Chipkarte (104, 410) ermittelt, wobei der Nachladeautomat (102) anhand des zumindest einen Identifikators die auf die Chipkarte (104, 410) nachzuladende Software ermittelt.

4. Verfahren nach einem der vorhergehenden Ansprüche, ferner mit einem Nachladetoken (114), wobei die nachzuladende Software auf dem Nachladetoken (114) enthalten ist, wobei der Nachladetoken (114) zu Beginn des Verfahrens mit dem Nachladeautomat (102) verbunden wird, wobei die Verbindung zwischen Nachladeautomat (102) und Nachladetoken (114) für eine Datenübertragung zwischen Nachladeautomat (102) und Nachladetoken (114) ausgebildet ist, wobei der Nachladeautomat (102) dazu ausgebildet ist, die nachzuladende Software aus dem Nachladetoken (114) über die Kommunikationsverbindung in den ersten nicht-flüchtigen elektronischen Speicher (424) der Chipkarte (104, 410) zu übertragen.

5. Verfahren nach einem der vorhergehenden Ansprüche, wobei die Chipkarte (104, 410) einen schreibgeschützten nicht-flüchtigen gesicherten Speicherbereich aufweist, wobei der schreibgeschützte Speicherbereich zumindest die Funktion des Entschlüsselns des ersten Datensatzes, sowie das hierzu notwendige Schlüsselmaterial beinhaltet.

6. Verfahren nach Anspruch 5, wobei der erste Datensatz durch eine symmetrische Verschlüsselung mit einem chipkartenindividuellen Schlüssel erzeugt wird, wobei der chipkartenindividuelle Schlüssel in dem geschützten Speicherbereich gespeichert ist, oder wobei der chipkartenindividuelle Schlüssel aus chipkartenspezifischen Attributen abgeleitet ist, wobei der chipkartenindividuelle Schlüssel erst nach Verfahrensschritt a) erzeugt wird.

7. Verfahren nach einem der vorhergehenden Ansprüche, wobei der erste Datensatz durch die Chipkarte (104, 410) mit einem chipkartenindividuellen Schlüssel signiert wird, wobei nach dem empfangen des ersten Datensatzes von dem Nachladeautomaten (102) die Signatur des ersten Datensatzes überprüft wird, wobei nur bei erfolgreicher Überprüfung der Signatur des ersten Datensatzes der erste Datensatz installiert wird.

8. Verfahren nach einem der vorhergehenden Ansprüche 2-7, wobei das Verfahren ferner eine Änderung von Kontrolldaten (444, 128,130) der Chipkarte (104, 410) umfasst, wobei die Chipkarte (104, 410) einen flüchtigen Arbeitsspeicher (420) aufweist, wobei das Chipkartendateisystem Verzeichnisdateien (DFs) und Datendateien (EFs) beinhaltet, wobei ein Dateibaum bestehend aus zumindest einer Verzeichnisdatei (426) und mehreren Datendateien (432, 440,...) in dem nicht-flüchtigen elektronischen Speicher (424) gespeichert ist, wobei in zumindest einer der Dateien Kontrolldaten (444, 128,130) für die Nutzdaten (450) gespeichert sind, die Nutzdaten in einem Speicherbereich des nicht-flüchtigen elektronischen Speichers gespeichert sind und ein Zeiger (446) auf diesen Speicherbereich in der zumindest einen Datendatei (440) gespeichert ist, wobei die Chipkarte für den Wirkbetrieb aktiviert ist, wobei zur Änderung der Kontrolldaten durch das Chipkartenbetriebssystem eine Kopie (456) zumindest eines die Datei (440) beinhaltenden Teilbaums des Dateibaums in der Chipkarte temporär in dem Arbeitsspeicher (420) gespeichert wird, geänderte Kontrolldaten (444, 128,130) in der zumindest einen Datei des kopierten Teilbaums gespeichert werden, und die geänderte Kopie des Teilbaums in dem ersten elektronischen Speicher permanent gespeichert und aktiviert wird, und der ursprüngliche Teilbaum gelöscht oder deaktiviert wird oder die Änderungen der Kontrolldaten direkt im ersten nicht-flüchtigen Speicher durchgeführt werden.

9. Verfahren nach einem der vorhergehenden Ansprüche, wobei die Nutzdaten (124, 126, 442, 450) relokierbaren Programmcode beinhalten, wobei nach Wiederherstellung der Nutzdaten (124, 126, 442, 450) der nicht-flüchtige elektronische Speicher (424) ) unbelegte Speicherbereiche (212, 214...) und mit relokierbarem Programmcode belegte Speicherbereiche (204, 206,...) umfasst, wobei das Verfahren ferner das Defragmentieren des nicht-flüchtigen elektronischen Speichers (424) umfasst, wobei das Defragmentieren ein Verschieben des in den belegten Speicherbereichen gespeicherten relokierbaren Programmcodes umfasst, sodass mehrere der unbelegten Speicherbereiche einen zusammenhängenden unbelegten Speicherbereich bilden.

10. Verfahren nach Anspruch 9, wobei das Defragmentieren das Aneinanderreihen des in den belegten Speicherbereichen (204, 206, ...) gespeicherten relokierbaren Programmcodes durch physikalisches Verschieben des relokierbaren Programmcodes umfasst, und/oder
wobei die logische Reihenfolge der Speicherbereiche des nicht-flüchtigen elektronischen Speichers (424) durch eine Zuordnungstabelle festgelegt ist, wobei das Defragmentieren das Aneinanderreihen eines Teils der belegten Speicherbereiche (204, 206, ...) durch Manipulation der Zuordnungstabelle umfasst.

11. Verfahren nach einem der vorhergehenden Ansprüche 9-10, wobei das Defragmentieren umfasst:
a) Ermitteln einer ersten Position eines ersten, unbelegten Speicherbereichs (212),
b) Ermitteln einer zweiten Position eines zweiten, belegten Speicherbereichs (206), wobei der zweite belegte Speicherbereich (206) in dem Speicher dem ersten freien Speicherbereich (212) logisch direkt nachfolgt,
c) Verschieben des in dem zweiten belegten Speicherbereich (206) gespeicherten relokierbaren Programmcodes an die erste Position,
wobei die zuvor beschriebenen Schritte so lange wiederholt werden, bis auf den ersten unbelegten Speicherbereich (212) kein belegter Speicherbereich mehr folgt, oder
wobei das Defragmentieren umfasst:
a) Ermitteln der jeweiligen Positionen und Längen der belegten Speicherbereiche (204, 206, ...),
b) Ermitteln der jeweiligen Positionen und Längen der unbelegten Speicherbereiche (212, 214, ...),
c) Verschieben des in einem belegten Speicherbereich gespeicherten relokierbaren Programmcode an die Positionen von unbelegten Speicherbereichen gleicher oder größerer Länge.

12. Verfahren nach einem der Ansprüche 10-11, wobei das Defragmentieren ferner das Definieren eines Schwellwertes für die Länge eines belegten Speicherbereiches (204, 206,...) umfasst, wobei das Verschieben von in belegten Speicherbereichen (204, 206,...) gespeicherten relokierbaren Programmcodes mit einer Länge, die größer ist als der Schwellwert durch Manipulation der Zuordnungstabelle erfolgt und wobei das Verschieben von in belegten Speicherbereichen (204, 206,...) gespeicherten relokierbaren Programmcodes mit einer Länge, die kleiner ist als der Schwellwert durch physikalisches Verschieben des relokierbaren Programmcodes der belegten Speicherbereiche erfolgt (204, 206,...).

13. Nachladeautomat (102), wobei der Nachladeautomat (102) dazu ausgebildet ist, durch den Nachladeautomaten (102) bereitgestellte Software auf eine Chipkarte (104, 410) nachzuladen, wobei der Nachladeautomat (102) ein Authentisierungstoken (112) umfasst, wobei der Authentisierungstoken (112) Daten für eine Authentisierung eines Benutzers des Nachladeautomaten (102) beinhaltet, wobei der Authentisierungstoken (112) als austauschbarer physischer Datenträger ausgebildet ist, wobei nur derjenige Benutzer den Nachladeautomaten nutzen kann, dessen Authentisierungstoken aktuell mit dem Nachladeautomaten verbunden ist, wobei das Nachladen durch den Nachladeautomaten (102) umfasst:
a) Aufbauen eine Kommunikationsverbindung mit der Chipkarte (104, 410), wobei das Aufbauen der Kommunikationsverbindung eine gegenseitige Authentisierung des Nachladeautomaten (102) und der Chipkarte (104, 410) beinhaltet, wozu in dem Authentisierungstoken (112) Authentisierungsdaten hinterlegt sind, welche im Zuge der gegenseitigen Authentisierung Verwendung finden, wobei durch die Authentisierung ein sicherer Kommunikationskanal zwischen Nachladeautomat (102) und Chipkarte (104) aufgebaut wird,
b) Empfangen eines ersten Datensatzes von der Chipkarte (104, 410) über die Kommunikationsverbindung, wobei der erste Datensatz ausschließlich über den sicheren Kommunikationskanal übermittelt wird,
c) Speichern des ersten Datensatzes,
d) Nachladen der Software auf die Chipkarte (104, 410) durch Zugriff auf die Chipkarte (104, 410), wobei der Nachladeautomaten (102) nur nach erfolgreicher Authentisierung gegenüber der Chipkarte (104, 410) Zugriff auf in der Chipkarte (104, 410) enthaltene Daten erhält,
e) Übermitteln des ersten Datensatzes an die Chipkarte (104, 410) über die Kommunikationsverbindung.

14. Nachladeautomat (102) nach Anspruch 13, wobei der Nachladeautomat (102) einen mechanischen Einzug aufweist, wobei der mechanische Einzug zur Aufnahme der Chipkarte (104, 410) ausgebildet ist, wobei der Einzug ferner dazu ausgebildet ist, bei dem Nachladevorgang die Chipkarte (104, 410) so lange vor einem Entfernen aus dem Nachladeautomat (102) zu schützen, bis das Verfahren zum Nachladen abgeschlossen ist, und/oder
wobei der Nachladeautomat (102) eine Energiequelle (118) umfasst, wobei es sich bei der Energiequelle (118) um eine abgeschlossene interne Energiequelle und/oder um eine externe Energiequelle handelt, und/oder
wobei der Nachladeautomat (102) einen Nachladetoken (114) umfasst, wobei der Nachladetoken (114) die auf die Chipkarte (104) nachzuladende Software beinhaltet, wobei der Nachladetoken (114) als austauschbarer physischer Datenträger ausgebildet ist.

15. System, umfassend einen Nachladeautomat (102) nach einem der Ansprüche 13 bis 14 und eine Chipkarte (104, 410) mit zumindest einem nicht-flüchtigen elektronischen Speicher (424) mit einer darin enthaltenen logischen Datenstruktur (122), sowie Nutzdaten (124, 126, 442, 450) und Kontrolldaten (128, 130), einem Prozessor (414) und einer Kommunikationsschnittstelle (412), wobei die Chipkarte (104, 410) dazu ausgebildet ist, das folgende Verfahren durchzuführen:
a) Aufbauen eine Kommunikationsverbindung mit dem Nachladeautomaten (102) über die Kommunikationsschnittstelle (412), wobei das Aufbauen der Kommunikationsverbindung eine gegenseitige Authentisierung des Nachladeautomaten (102) und der Chipkarte (104, 410) beinhaltet, wozu in dem Authentisierungstoken (112) Authentisierungsdaten hinterlegt sind, welche im Zuge der gegenseitigen Authentisierung Verwendung finden, wobei durch die Authentisierung ein sicherer Kommunikationskanal zwischen Nachladeautomat (102) und Chipkarte (104) aufgebaut wird,
b) Erzeugen eines ersten Datensatzes durch den Prozessor (414) durch verschlüsseln zumindest eines Teils der in dem nicht-flüchtigen elektronischen Speicher (424) gespeicherten Nutzdaten (124, 126, 442, 450), und/oder zumindest eines Teils der in dem nicht-flüchtigen elektronischen Speicher (424) gespeicherten Kontrolldaten (128,130) und/oder der logischen Datenstruktur (122),
c) Übermitteln des ersten Datensatzes an den Nachladeautomaten (102) über die Kommunikationsverbindung zur Speicherung des ersten Datensatzes in dem Nachladeautomaten (102), wobei der erste Datensatz ausschließlich über den sicheren Kommunikationskanal übermittelt wird,
d) Nachladen der Software auf die Chipkarte (104, 410) in den nicht-flüchtigen elektronischen Speicher (424) über die Kommunikationsverbindung, wobei der Nachladeautomaten (102) nur nach erfolgreicher Authentisierung gegenüber der Chipkarte (104, 410) Zugriff auf in der Chipkarte (104, 410) enthaltene Daten erhält,
e) Empfangen des ersten Datensatzes von dem Nachladeautomaten (102) über die Kommunikationsverbindung,
f) Wiederherstellen der Nutzdaten und/oder der Kontrolldaten (128, 130) und/oder der logischen Datenstruktur (122) in der Chipkarte (104, 410) durch entschlüsseln des ersten Datensatzes durch den Prozessor (414) und Speichern der in dem ersten Datensatz enthaltenen Nutzdaten (124, 126, 442, 450) und/oder Kontrolldaten (128, 130) und/oder logischen Datenstruktur (122) in dem nicht-flüchtigen elektronischen Speicher (424).

## Claims

1. A method for loading software provided by a loading machine (102) onto a smart card (104, 410) by means of the loading machine (102), wherein the smart card (104, 410) has a processor (414), a communications interface (412) and a non-volatile electronic memory (424) with, stored therein, a logical data structure (122) as well as useful data (124, 126, 442, 450) and control data (128, 130), wherein the loading machine (102) comprises an authentication token (112), wherein the authentication token (112) contains data for an authentication of a user of the loading machine (102), wherein the authentication token (112) is formed as an exchangeable physical data carrier, wherein only the user whose authentication token is currently connected to the loading machine may use the loading machine,
wherein the method comprises:
a) establishing a communications link between the loading machine (102) and the smart card (104) via the communications interface (412, 106), wherein the establishment of the communications link includes a mutual authentication of the loading machine (102) and the smart card (104, 410), for which purpose authentication data are stored in the authentication token and are used during the course of the mutual authentication, wherein a secure communications channel is established between the loading machine (102) and smart card (104) by means of the authentication,
b) generating a first data set by means of the processor (414) by encrypting at least a part of the useful data (124, 126, 442, 450) stored in the non-volatile electronic memory (424) and/or at least a part of the control data (128, 130) stored in the non-volatile electronic memory (424) and/or the logical data structure (122),
c) transmitting the first data set to the loading machine (102) via the communications link, wherein the first data set is transmitted exclusively via the secure communications channel,
d) storing the first data set in the loading machine (102),
e) loading the software onto the smart card (104, 410) by transmitting the software to be loaded to the smart card (104, 410) via the communications link and storing the transmitted software in the non-volatile electronic memory (424), wherein the loading machine (102) gains access to data contained in the smart card (104, 410) only following successful authentication to the smart card (104, 410),
f) transmitting the first data set to the smart card (104, 410) via the communications link, and
g) restoring the useful data (124, 126, 442, 450) and/or the control data (128, 130) and/or the logical data structure (122) of the smart card (102, 410) by decrypting the first data set by means of the processor (414) and storing the useful data (124, 126, 442, 450) and/or control data (128, 130) and/or the logical data structure (122) contained in the first data set in the non-volatile electronic memory (424).

2. The method according to claim 1, wherein the smart card (104, 410) has a smart card operating system (120, 418) with a hierarchical smart card file system (122) and applications stored therein, wherein the software to be loaded comprises a smart card operating system (120, 418) and/or applications which are/is intended to replace a smart card operating system (120, 418) installed on the smart card (104, 410) and/or a first part of the applications installed on the smart card (104, 410), wherein the loading of the software onto the smart card (104, 410) comprises the deletion of the useful data (124, 126, 442, 450) and/or of the control data (128, 130) and/or of the logical data structure (122), and also the further subsequent steps:
• between step d) and e), deleting the smart card operating system (120, 418) and/or the first part of the applications,
• between step e) and f), installing the loaded software on the smart card (104, 410) by means of the processor (414), or
wherein the smart card (104, 410) has a smart card operating system (120, 418) with a hierarchical smart card file system (122) and applications stored therein, wherein the software to be loaded comprises a smart card operating system (120, 418) and/or applications which are/is intended to replace a first smart card operating system (120, 418) installed on the smart card (104, 410) and/or a first part of the applications installed on the smart card (104, 410), wherein the loading of the software onto the smart card (104, 410) comprises:
• deleting the useful data (124, 126, 442, 450) transmitted in the first data set to the loading machine (102) and/or the control data (128, 130) and/or the logical data structure (122) from the non-volatile electronic memory (424) after step c) or d),
• in step e) storing the transmitted software in the memory region of the first non-volatile electronic memory (424) that has become free due to the deletion of the useful data (124, 126, 442, 450) and/or control data (128, 130) and/or logical data structure (122) transmitted in the first data set to the loading machine (102),
• installing the loaded software on the smart card (104, 410) by means of the processor (414),
• performing a functional check of the installed loaded software, wherein, in the event that correct functionality of the installed and loaded software is determined, the method comprises the deletion of the first smart card operating system (120, 418) and/or of the first part of the applications, and wherein, in the event that a defective functionality of the installed software is determined, the method comprises the deletion of the newly installed and loaded software.

3. The method according to either one of the preceding claims, wherein the loading machine (102), following establishment of the secure communications channel to the smart card (104, 410), determines at least one identifier of the smart card (104, 410), wherein the loading machine (102) determines the software that is to be loaded onto the smart card (104, 410) on the basis of the at least one identifier.

4. The method according to any one of the preceding claims, also comprising a loading token (114), wherein the software to be loaded is contained on the loading token (114), wherein the loading token (114) is connected to the loading machine (102) at the start of the method, wherein the connection between the loading machine (102) and loading token (114) is designed for a data transfer between the loading machine (102) and loading token (114), wherein the loading machine (102) is designed to transfer the software to be loaded from the loading token (114) via the communications link into the first non-volatile electronic memory (424) of the smart card (104, 410) .

5. The method according to any one of the preceding claims, wherein the smart card (104, 410) has a write-protected non-volatile secured memory region, wherein the write-protected memory region includes at least the function of decrypting the first data set, and also the decryption material necessary for this purpose.

6. The method according to claim 5, wherein the first data set is generated by a symmetrical encryption by means of a key that is individual to the smart card, wherein the key that is individual to the smart card is stored in the protected memory region, or wherein the key that is individual to the smart card is derived from attributes that are specific to the smart card, wherein the key that is individual to the smart card is only generated after method step a).

7. The method according to any one of the preceding claims, wherein the first data set is signed by the smart card (104, 410) by means of a key that is individual to the smart card, wherein, once the first data set has been received by the loading machine (102), the signature of the first data set is checked, wherein the first data set is installed only if the checking of the signature of the first data set proves to be successful.

8. The method according to any one of preceding claims 2-7, wherein the method also comprises a modification of control data (444, 128, 130) of the smart card (104, 410), wherein the smart card (104, 410) has a volatile main memory (420), wherein the smart card file system contains directory files (DFs) and data files (EFs), wherein a file tree consisting of at least one directory file (426) and a plurality of data files (432, 440, ...) is stored in the non-volatile electronic memory (424), wherein control data (444, 128, 130) for the useful data (450) are stored in at least one of the files, the useful data are stored in a memory region of the non-volatile electronic memory, and a pointer (446) to this memory region is stored in the at least one data file (440), wherein the smart card is activated for functioning operation, wherein, in order to modify the control data by means of the smart card operating system, a copy (456) of at least one sub-tree of the file tree containing the file (440) is stored in the smart card temporarily in the main memory (420), modified control data (444, 128, 130) are stored in the at least one file of the copied sub-tree, and the modified copy of the sub-tree is stored permanently in the first electronic memory and is activated, and the original sub-tree is deleted or deactivated or the modifications of the control data are performed directly in the first non-volatile memory.

9. The method according to any one of the preceding claims, wherein the useful data (124, 126, 442, 450) include relocatable program codes, wherein, once the useful data (124, 126, 442, 450) have been restored, the non-volatile electronic memory (424) comprises unoccupied memory regions (212, 214, ...) and memory regions (204, 206, ...) occupied by relocatable program codes, wherein the method also comprises the defragmentation of the non-volatile electronic memory (424), wherein the defragmentation comprises a shifting of the relocatable program code stored in the occupied memory regions, so that a plurality of the unoccupied memory regions form a continuous unoccupied memory region.

10. The method according to claim 9, wherein the defragmentation comprises the stringing together of the relocatable program code stored in the occupied memory regions (204, 206, ...) by a physical shifting of the relocatable program code and/or
wherein the logical order of the memory regions of the non-volatile electronic memory (424) is determined by an assignment table, wherein the defragmentation comprises the stringing together of a part of the occupied memory regions (204, 206, ...) by manipulation of the assignment table.

11. The method according to any one of preceding claims 9-10, wherein the defragmentation comprises:
a) determining a first position of a first, unoccupied memory region (212),
b) determining a second position of a second, occupied memory region (206), wherein the second occupied memory region (206), in the memory, follows on logically directly from the first free memory region (212),
c) shifting the relocatable program code stored in the second occupied memory region (206) to the first position,
wherein the above-described steps are repeated until the first unoccupied memory region (212) is no longer followed by an occupied memory region, or
wherein the defragmentation comprises:
a) determining the positions and lengths of the occupied memory regions (204, 206, ...),
b) determining the positions and lengths of the unoccupied memory regions (212, 214, ...),
c) shifting the relocatable program code stored in an occupied memory region to the positions of unoccupied memory regions of equal or greater length.

12. The method according to any one of claims 10-11, wherein the defragmentation also comprises defining a threshold value for the length of an occupied memory region (204, 206, ...), wherein the shifting of relocatable program codes which are stored in occupied memory regions (204, 206, ...) and which have a length greater than the threshold value is implemented by manipulation of the assignment table, and wherein the shifting of relocatable program codes which are stored in occupied memory regions (204, 206, ...) and which have a length smaller than the threshold value is implemented by a physical shifting of the relocatable program codes of the occupied memory regions (204, 206, ...).

13. A loading machine (102), wherein the loading machine (102) is designed to load software provided by the loading machine (102) onto a smart card (104, 410), wherein the loading machine (102) comprises an authentication token (112), wherein the authentication token (112) contains data for an authentication of a user of the loading machine (102), wherein the authentication token (112) is formed as an exchangeable physical data carrier, wherein only the user whose authentication token is currently connected to the loading machine may use the loading machine, wherein the loading by the loading machine (102) comprises:
a) establishing a communications link to the smart card (104, 410), wherein the establishment of the communications link includes a mutual authentication of the loading machine (102) and the smart card (104, 410), for which purpose authentication data are stored in the authentication token (112) and are used during the course of the mutual authentication, wherein a secure communications channel is established between the loading machine (102) and smart card (104) by means of the authentication,
b) receiving a first data set from the smart card (104, 410) via the communications link, wherein the first data set is transmitted exclusively via the secure communications channel,
c) storing the first data set,
d) loading the software onto the smart card (104, 410) by accessing the smart card (104, 410), wherein the loading machine (102) gains access to data contained in the smart card (104, 410) only following successful authentication to the smart card (104, 410),
e) transmitting the first data set to the smart card (104, 410) via the communications link.

14. The loading machine (102) according to claim 13,
wherein the loading machine (102) has a mechanical feed, wherein the mechanical feed is designed to receive the smart card (104, 410), wherein the feed is also designed, during the loading process, to protect the smart card (104, 410) against removal from the loading machine (102) until the loading method is complete, and/or
wherein the loading machine (102) comprises a power source (118), wherein the power source (118) is a self-contained, internal power source and/or an external power source, and/or
wherein the loading machine (102) comprises a loading token (114), wherein the loading token (114) contains software to be loaded onto the smart card (104), wherein the loading token (114) is designed as an exchangeable physical data carrier.

15. A system comprising a loading machine (102) according to any one of claims 13 to 14 and a smart card (104, 410) comprising at least one non-volatile electronic memory (424) with a logical data structure (122) contained therein, as well as useful data (124, 126, 442, 450) and control data (128, 130), a processor (414) and a communications interface (412), wherein the smart card (104, 410) is designed to carry out the following method:
a) establishing a communications link to the loading machine (102) via the communications interface (412), wherein the establishment of the communications link includes a mutual authentication of the loading machine (102) and the smart card (104, 410), for which purpose authentication data are stored in the authentication token (112) and are used during the course of the mutual authentication, wherein a secure communications channel is established between the loading machine (102) and smart card (104) by means of the authentication,
b) generating a first data set by means of the processor (414) by encrypting at least a part of the useful data (124, 126, 442, 450) stored in the non-volatile electronic memory (424) and/or at least a part of the control data (128, 130) stored in the non-volatile electronic memory (424) and/or the logical data structure (122),
c) transmitting the first data set to the loading machine (102) via the communications link in order to store the first data set in the loading machine (102), wherein the first data set is transmitted exclusively via the secure communications channel,
d) loading the software onto the smart card (104, 410) into the non-volatile electronic memory (424) via the communications link, wherein the loading machine (102) gains access to data contained in the smart card (104, 410) only following successful authentication to the smart card (104, 410),
e) receiving the first data set from the loading machine (102) via the communications link, and
f) restoring the useful data and/or the control data (128, 130) and/or the logical data structure (122) in the smart card (104, 410) by decrypting the first data set by means of the processor (414) and storing the useful data (124, 126, 442, 450) and/or control data (128, 130) and/or logical data structure (122) contained in the first data set in the non-volatile electronic memory (424).

## Revendications

1. Procédé pour recharger un logiciel fourni par un automate de rechargement (102) sur une carte à puce (104, 410) par l'automate de rechargement (102), dans lequel la carte à puce (104, 410) présente un processeur (414), une interface de communication (412) et une mémoire électronique (424) non volatile avec une structure de données (122) logique y étant enregistrée, ainsi que des données d'utilisation (124, 126, 442, 450) et des données de commande (128, 130), dans lequel l'automate de rechargement (102) comprend un jeton d'authentification (112), où le jeton d'authentification (112) contient des données permettant une authentification d'un utilisateur de l'automate de rechargement (102), où le jeton d'authentification (112) est conçu sous forme d'un support de données physique échangeable, où uniquement l'utilisateur en question, dont le jeton d'authentification est relié effectivement avec l'automate de rechargement, peut utiliser l'automate de rechargement,
où le procédé comprend :
a) l'établissement d'une connexion de communication entre l'automate de rechargement (102) et la carte à puce (104) par le biais de l'interface de communication (412, 106), où l'établissement de la connexion de communication contient une authentification réciproque de l'automate de rechargement (102) et de la carte à puce (104, 410), c'est la raison pour laquelle des données d'authentification sont stockées dans le jeton d'authentification (112), lesquelles sont employées dans le cadre de l'authentification réciproque, où un canal de communication sécurisé entre l'automate de rechargement (102) et la carte à puce (104) est établi par l'authentification,
b) la création d'un premier ensemble de données par le processeur (414) par le chiffrement d'au moins une partie des données d'utilisation (124, 126, 442, 450) stockées dans la mémoire électronique (424) non volatile et/ou d'au moins une partie des données de commande (128, 130) stockées dans la mémoire électronique (424) non volatile, et/ou de la structure de données (122) logique,
c) la transmission du premier ensemble de données à l'automate de rechargement (102) par le biais de la connexion de communication, où le premier ensemble de données est transmis exclusivement par le biais du canal de communication sécurisé,
d) le stockage du premier ensemble de données dans l'automate de rechargement (102),
e) le rechargement du logiciel sur la carte à puce (104, 410) par la transmission du logiciel à recharger sur la carte à puce (104, 410) par le biais de la connexion de communication et le stockage du logiciel transmis dans la mémoire électronique (424) non volatile, où l'automate de rechargement (102) n'obtient l'accès aux données contenues sur la carte à puce (104, 410) qu'après une authentification réussie par rapport à la carte à puce (104, 410),
f) la transmission du premier ensemble de données à la carte à puce (104, 410) par le biais de la connexion de communication,
g) la restauration des données d'utilisation (124, 126, 442, 450), et/ou des données de commande (128, 130), et/ou de la structure de données (122) logique de la carte à puce (104, 410) par le déchiffrement du premier ensemble de données par le processeur (414) et le stockage des données d'utilisation (124, 126, 442, 450) contenues dans le premier ensemble de données, et/ou des données de commande (128, 130), et/ou de la structure de données (122) logique, dans la mémoire électronique (424) non volatile.

2. Procédé selon la revendication 1, dans lequel la carte à puce (104, 410) présente un système de fonctionnement de carte à puce (120, 418) avec un système de données de carte à puce (122) hiérarchiques et des applications y étant enregistrées, dans lequel le logiciel à recharger comprend un système de fonctionnement de carte à puce (120, 418) et/ou des applications, lesquels doivent remplacer un système de fonctionnement de carte à puce (120, 418) installé sur la carte à puce (104, 410) et/ou une première partie des applications installées sur la carte à puce (104, 410), où le rechargement du logiciel sur la carte à puce (104, 410) comprend l'effacement des données d'utilisation (124, 126, 442, 450), et/ou des données de commande (128, 130), et/ou de la structure de données (122) logique, ainsi que les autres étapes suivantes :
• entre l'étape d) et l'étape e), l'effacement du système de fonctionnement de carte à puce (120, 418), et/ou de la première partie des applications,
• entre l'étape e) et l'étape f), l'installation du logiciel rechargé sur la carte à puce (104, 410) par le processeur (414), ou
dans lequel la carte à puce (104, 410) présente un système de fonctionnement de carte à puce (120, 418) avec un système de données de carte à puce (122) hiérarchiques et des applications y étant enregistrées, dans lequel le logiciel à recharger comprend un système de fonctionnement de carte à puce (120, 418) et/ou des applications, lesquels doivent remplacer un système de fonctionnement de carte à puce (120, 418) installé sur la carte à puce (104, 410), et/ou une première partie des applications installées sur la carte à puce (104, 410), où le rechargement du logiciel sur la carte à puce (104, 410) comprend :
• l'effacement des données d'utilisation (124, 126, 442, 450) transmises dans le premier ensemble de données à l'automate de rechargement (102), et/ou des données de commande (128, 130), et/ou de la structure de données (122) logique, de la mémoire électronique (424) non volatile après l'étape c) ou l'étape d),
• dans l'étape e), l'enregistrement du logiciel transmis dans la zone de mémoire de la première mémoire électronique (424) non volatile devenue libre par l'effacement des données d'utilisation (124, 126, 442, 450) transmises dans le premier ensemble de données à l'automate de rechargement (102), et/ou des données de commande (128, 130), et/ou de la structure de données (122) logique,
• l'installation du logiciel rechargé sur la carte à puce (104, 410) par le processeur (414),
• l'exécution d'une vérification de fonctionnement du logiciel rechargé installé, dans lequel, lors d'un constat d'une fonctionnalité correcte du logiciel rechargé installé, le procédé comprend l'effacement du premier système de fonctionnement de carte à puce (120, 418), et/ou de la première partie des applications, et dans lequel, lors d'un constat d'une fonctionnalité défaillante du logiciel installé, le procédé comprend l'effacement du logiciel rechargé nouvellement installé.

3. Procédé selon l'une des revendications précédentes, dans lequel l'automate de rechargement (102) détermine au moins un identificateur de la carte à puce (104, 410) après l'établissement du canal de communication sécurisé avec la carte à puce (104, 410), dans lequel l'automate de rechargement (102) détermine le logiciel à recharger sur la carte à puce (104, 410) à l'aide de l'au moins un identificateur.

4. Procédé selon l'une des revendications précédentes, doté en outre d'un jeton de rechargement (114), dans lequel le logiciel à recharger est contenu sur le jeton de rechargement (114), dans lequel le jeton de rechargement (114) est relié avec l'automate de rechargement (102) au début du procédé, dans lequel la liaison entre l'automate de rechargement (102) et le jeton de rechargement (114) est conçue pour une transmission de données entre l'automate de rechargement (102) et le jeton de rechargement (114), dans lequel l'automate de rechargement (102) est conçu pour transmettre le logiciel à recharger à partir du jeton de rechargement (114) dans la première mémoire électronique (424) non volatile de la carte à puce (104, 410) par le biais de la connexion de communication.

5. Procédé selon l'une des revendications précédentes, dans lequel la carte à puce (104, 410) présente une zone de mémoire protégée non volatile protégée contre l'écriture, dans lequel la zone de mémoire protégée contre l'écriture contient au moins la fonction de déchiffrement du premier ensemble de données, ainsi que le matériel en clés nécessaire à cet effet.

6. Procédé selon la revendication 5, dans lequel le premier ensemble de données est généré par un chiffrement symétrique avec une clé individuelle de la carte à puce, dans lequel la clé individuelle de la carte à puce est enregistrée dans la zone de mémoire sécurisée, ou bien, dans lequel la clé individuelle de la carte à puce est dérivée d'attributs spécifiques à la carte à puce, dans lequel la clé individuelle de la carte à puce n'est générée après l'étape de procédé a).

7. Procédé selon l'une des revendications précédentes, dans lequel le premier ensemble de données est signé avec une clé individuelle de la carte à puce par la carte à puce (104, 410), dans lequel la signature du premier ensemble de données est vérifiée après la réception du premier ensemble de données par l'automate de rechargement (102), dans lequel le premier ensemble de données est installé uniquement pour une vérification réussie de la signature du premier ensemble de données.

8. Procédé selon l'une des revendications précédentes 2 à 7, où le procédé comprend en outre une modification de données de commande (444, 128, 130) de la carte à puce (104, 410), dans lequel la carte à puce (104, 410) présente une mémoire de travail (420) volatile, dans lequel le système de données de carte à puce contient des fichiers de répertoire (DFs) et des fichiers de données (EFs), dans lequel une arborescence de fichiers constituée d'au moins un fichier de répertoire (426) et de plusieurs fichiers de données (432, 440, ...) est stockée dans la mémoire électronique (424) non volatile, dans lequel, dans au moins un des fichiers, sont stockées des données de commande (444, 128, 130) pour les données d'utilisation (450), les données d'utilisation sont stockées dans une zone de mémoire de la mémoire électronique non volatile et un indicateur (446) est stocké sur cette zone de mémoire dans l'au moins un fichier de données (440), dans lequel la carte à puce est activée pour le fonctionnement actif, dans lequel, pour la modification des données de commande par le système de fonctionnement de carte à puce, une copie (456) d'au moins une arborescence partielle de l'arborescence de fichiers contenant le fichier (440) est stockée dans la carte à puce de manière temporaire dans la mémoire de travail (420), des données de commande (444, 128, 130) modifiées sont stockées dans l'au moins un fichier de l'arborescence partielle copiée, et la copie modifiée de l'arborescence partielle est stockée de manière permanente dans la première mémoire électronique et est activée, et l'arborescence partielle d'origine est effacée ou désactivée, ou les modifications des données de commande sont directement exécutées dans la première mémoire non volatile.

9. Procédé selon l'une des revendications précédentes, dans lequel les données d'utilisation (124, 126, 442, 450) contiennent des codes de programme relocalisables, dans lequel, après la restauration des données d'utilisation (124, 126, 442, 450), la mémoire électronique (424) non volatile comprend des zones de mémoires non occupées (212, 214,...) et des zones de mémoire occupées (204, 206, ...) avec des codes de programmes relocalisables, où le procédé comprend en outre la défragmentation de la mémoire électronique (424) non volatile, dans lequel la défragmentation comprend un déplacement du code de programme relocalisable stocké dans les zones de mémoire occupées de sorte que plusieurs parmi les zones de mémoire non occupées forment une zone de mémoire non occupée assemblée.

10. Procédé selon la revendication 9, dans lequel la défragmentation comprend le classement, l'un derrière l'autre, des codes de programme relocalisables stockés dans les zones de mémoire occupées (204, 206,...) par un déplacement physique du code de programme relocalisable, et/ou
dans lequel le classement logique des zones de mémoire de la mémoire électronique (424) non volatile est fixé par un tableau d'association, dans lequel la défragmentation comprend le classement d'une partie des zones de mémoire occupées (204, 206, ...) par une manipulation du tableau d'association.

11. Procédé selon l'une des revendications précédentes 9 et 10, dans lequel la défragmentation comprend :
a) la détermination d'une première position d'une première zone de mémoire non occupée (212),
b) la détermination d'une deuxième position d'une deuxième zone de mémoire occupée (206), dans lequel la deuxième zone de mémoire occupée (206) suit directement de manière logique la première zone de mémoire libre (212) dans la mémoire,
c) le déplacement du code de programme relocalisable stocké dans la deuxième zone de mémoire occupée (206) à la première position,
dans lequel les étapes précédemment décrites sont répétées aussi longtemps qu'il n'y a pas de zone de mémoire occupée postérieure à la première zone de mémoire non occupée (212), ou
dans lequel la défragmentation comprend :
a) la détermination des positions et des tailles respectives des zones de mémoire occupées (204, 206, ...),
b) la détermination des positions et des tailles respectives des zones de mémoire non occupées (212,214, ...),
c) le déplacement du code de programme relocalisable stocké dans une zone de mémoire occupée à des positions de zones de mémoire non occupées de taille identique ou supérieure.

12. Procédé selon l'une des revendications 10 ou 11, dans lequel la défragmentation comprend en outre la définition d'une valeur limite pour la taille d'une zone de mémoire occupée (204, 206, ...), dans lequel le déplacement d'un code de programme relocalisable stocké dans des zones de mémoire occupées (204, 206, ...) a lieu avec une taille qui est supérieure à la valeur limite par une manipulation du tableau d'association, et dans lequel le déplacement d'un code de programme relocalisable stocké dans des zones de mémoire occupées (204, 206, ...) a lieu avec une taille qui est inférieure à la valeur limite par un déplacement physique du code de programme relocalisable des zones de mémoire occupées (204, 206,...).

13. Automate de rechargement (102), l'automate de rechargement (102) étant conçu pour recharger un logiciel fourni par l'automate de rechargement (102) sur une carte à puce (104, 410), l'automate de rechargement (102) comprenant un jeton d'authentification (112), dans lequel le jeton d'authentification (112) contient des données pour une authentification d'un utilisateur de l'automate de rechargement (102), dans lequel le jeton d'authentification (112) est conçu sous forme d'un support de données physique échangeable, où uniquement l'utilisateur en question, dont le jeton d'authentification est relié effectivement avec l'automate de rechargement, peut utiliser l'automate de rechargement, où le rechargement par l'automate de rechargement ((102) comprend :
a) l'établissement d'une connexion de communication avec la carte à puce (104, 410), où l'établissement de la connexion de communication contient une authentification réciproque de l'automate de rechargement (102) et de la carte à puce (104, 410), c'est la raison pour laquelle des données d'authentification sont stockées dans le jeton d'authentification (112), lesquelles sont employées dans le cadre de l'authentification réciproque, où un canal de communication sécurisé entre l'automate de rechargement (102) et la carte à puce (104) est établi par l'authentification,
b) la réception d'un premier ensemble de données à partir de la carte à puce (104, 410) par le biais de la connexion de communication, où le premier ensemble de données est exclusivement transmis par le biais du canal de communication sécurisé,
c) le stockage du premier ensemble de données,
d) le rechargement du logiciel sur la carte à puce (104, 410) par l'accès à la carte à puce (104, 410), où l'automate de rechargement (102) n'obtient l'accès aux données contenues sur la carte à puce (104, 410) qu'après une authentification réussie par rapport à la carte à puce (104, 410) par le biais de la connexion de communication,
e) la transmission du premier ensemble de données à la carte à puce (104, 410) par le biais de la connexion de communication.

14. Automate de rechargement (102) selon la revendication 13, où l'automate de rechargement (102) présente une entrée mécanique, où l'entrée mécanique est conçue pour la réception de la carte à puce (104, 410), où l'entrée est en outre conçue pour protéger la carte à puce (104, 410) contre un retrait de l'automate de rechargement (102) lors du processus de rechargement aussi longtemps que le procédé de rechargement n'est pas terminé, et/ou
où l'automate de rechargement (102) comprend une source d'énergie (118), où, dans le cas de la source d'énergie (118), il s'agit d'une source d'énergie interne enfermée et/ou d'une source d'énergie externe, et/ou
où l'automate de rechargement (102) comprend un jeton de rechargement (114), où le jeton de rechargement (114) contient le logiciel à recharger sur la carte à puce (104), où le jeton de rechargement (114) est conçu sous forme de support de données physique échangeable.

15. Système comprenant un automate de rechargement (102) selon l'une des revendications 13 à 14 et une carte à puce (104, 410) avec au moins une mémoire électronique (424) non volatile avec une structure de données (122) logique y étant enregistrée, ainsi que des données d'utilisation (124, 126, 442, 450) et des données de commande (128, 130), un processeur (414) et une interface de communication (412), dans lequel la carte à puce (104, 410) est conçue pour exécuter le procédé suivant :
a) l'établissement d'une connexion de communication avec l'automate de rechargement (102) par le biais de l'interface de communication (412), où l'établissement de la connexion de communication contient une authentification réciproque de l'automate de rechargement (102) et de la carte à puce (104, 410), c'est la raison pour laquelle des données d'authentification sont stockées dans le jeton d'authentification (112), lesquelles sont employées dans le cadre de l'authentification réciproque, où un canal de communication sécurisé entre l'automate de rechargement (102) et la carte à puce (104) est établi par l'authentification,
b) la création d'un premier ensemble de données par le processeur (414) par le chiffrement d'au moins une partie des données d'utilisation (124, 126, 442, 450) stockées dans la mémoire électronique (424) non volatile et/ou d'au moins une partie des données de commande (128, 130) stockées dans la mémoire électronique (424) non volatile, et/ou de la structure de données (122) logique,
c) la transmission du premier ensemble de données à l'automate de rechargement (102) par le biais de la connexion de communication pour le stockage du premier ensemble de données dans l'automate de rechargement (102), où le premier ensemble de données est transmis exclusivement par le biais du canal de communication sécurisé,
d) le rechargement du logiciel sur la carte à puce (104, 410) dans la mémoire électronique (424) non volatile par le biais de la connexion de communication, où l'automate de rechargement (102) n'obtient l'accès aux données contenues sur la carte à puce (104, 410) qu'après une authentification réussie par rapport à la carte à puce (104, 410),
e) la réception du premier ensemble de données à partir de l'automate de rechargement (102) par le biais de la connexion de communication,
f) la restauration des données d'utilisation, et/ou des données de commande (128, 130), et/ou de la structure de données (122) logique dans la carte à puce (104, 410) par le déchiffrement du premier ensemble de données par le processeur (414) et le stockage des données d'utilisation (124, 126, 442, 450) contenues dans le premier ensemble de données, et/ou des données de commande (128, 130), et/ou de la structure de données (122) logique, dans la mémoire électronique (424) non volatile.
